# EUROPÄISCHE PATENTSCHRIFT

(11) **EP 1 898 705 B1**
(45) Veröffentlichungstag und Bekanntmachung des Hinweises auf die Patenterteilung: **14.10.2009**
(21) Anmeldenummer: 06753600.3
(22) Anmeldetag: 13.05.2006
(51) Int. Cl.: A01N 47/36, A01N 25/04

(54) **ÖLSUSPENSIONSKONZENTRAT**
OIL SUSPENSION CONCENTRATE
CONCENTRE DE SUSPENSION D'HUILE

(30) Priorität: 04.06.2005 EP 05012120
(43) Veröffentlichungstag der Anmeldung: 19.03.2008
(73) Patentinhaber: Bayer CropScience AG, 40789 Monheim (DE)
(72) Erfinder: SIXL, Frank, 26529 Rechtsupweg (DE); SCHMIDT, Annika, 65594 Runkel (DE)
(86) Internationale Anmeldenummer: PCT/EP2006/004521
(87) Internationale Veröffentlichungsnummer: WO 2006/131187

(56) Entgegenhaltungen:
- EP-A- 0 313 317
- EP-A- 0 645 386
- EP-A- 0 764 404
- EP-A- 1 277 405
- WO-A-00/25586
- WO-A-01/30155
- WO-A-01/30156
- WO-A-01/82693
- WO-A-97/20467
- WO-A-20/05011378
- WO-A-20/05011382

## Beschreibung

Die vorliegende Erfindung betrifft das Gebiet der Pflanzenschutzmittelformulierungen. Die Erfindung betrifft flüssige Formulierungen in Form von Ölsuspensionskonzentraten, welche herbizide Wirkstoffe aus der Gruppe der Dioxazin-Pyridyl-Sulfonylharnstoffe enthalten.

Wirkstoffe für den Pflanzenschutz werden im allgemeinen nicht in ihrer reinen Form eingesetzt. In Abhängigkeit von dem Anwendungsgebiet und der Anwendungsart, sowie von physikalischen, chemischen und biologischen Parametern wird der Wirkstoff in Mischung mit üblichen Hilfs- und Zusatzstoffen als Wirkstoffformulierung eingesetzt. Auch die Kombinationen mit weiteren Wirkstoffen zur Erweiterung des Wirkungsspektrums und/oder zum Schutz der Kulturpflanzen (z.B. durch Safener, Antidote) sind bekannt.

Formulierungen von Wirkstoffen für den Pflanzenschutz sollten im allgemeinen eine hohe chemische und physikalische Stabilität, eine gute Applizierbarkeit und Anwenderfreundlichkeit und eine breite biologische Wirkung mit hoher Selektivität aufweisen.

Herbizide Wirkstoffe aus der Gruppe der Sulfonylharnstoffe weisen im allgemeinen ein hohes Maß an chemischer Reaktivität auf und neigen zum chemischen Abbau, z.B. durch Hydrolyse.

Eine Möglichkeit chemisch labile Wirkstoffe zu formulieren, ist die Herstellung fester Formulierungen. So sind Formulierungen von Wirkstoffen aus der Gruppe der Sulfonylharnstoffe, in Form von Pulvern, Granulaten und Tabletten bekannt (z. B. in EP 764404, WO 9834482, WO 9313658). Die Verfahren zur Herstellung von festen Formulierungen, z.B. in Form von Granulaten und Tabletten sind jedoch im allgemeinen aufwendig, insbesondere wenn niedrig schmelzende Wirkstoffe oder Hilfs- und Zusatzstoffe eingearbeitet werden. Außerdem sind feste Formulierungen im allgemeinen schwieriger zu applizieren und weniger anwenderfreundlich.

Flüssige Formulierungen von Sulfonylharnstoffen sind z.B. beschrieben in US 4599412, US 4683000, US 4671817, EP 0245058, WO 01/82693, EP 0313317, EP 0514768, EP 0163598 und EP 0514769. Pyridyl-Sulfonylharnstoffe sind z.B. beschrieben in US 5,476,936.

Die Aufgabe der vorliegenden Erfindung bestand darin, eine verbesserte Pflanzenschutzmittelformulierung zur Verfügung zu stellen, welche eine hohe chemische und physikalische Stabilität aufweist.

Diese Aufgabe wird gelöst durch das spezielle Ölsuspensionskonzentrat der vorliegenden Erfindung.

Die vodiegende Erfindung betrifft somit ein Ölsuspensionskonzentrat, enthaltend
a) ein oder mehrere herbizide Wirkstoffe aus der Gruppe der Dioxazin-Pyridyl-Sulfonylharnstoffe in suspendierter Form,
b) ein oder mehrere organische Lösungsmittel, und
c) nicht-ionische Emulgatoren und Dispergatoren.
   Darüber hinaus kann das erfindungsgemäße Ölsuspensionskonzentrat als weitere Komponenten gegebenenfalls noch enthalten:
e) ein oder mehrere Safener,
d) ein oder mehrere Sulfosuccinate,
h) einen oder mehrere von a) und c) verschiedene agrochemische Wirkstoffe,
f) ein oder mehrere anorganische Salze, und
g) übliche Hilfs- und Zusatzstoffe.

Unter dem Begriff Ölsuspensionskonzentrat (OD) wird ein Suspensionskonzentrat auf Basis organischer Lösungsmittel verstanden. Dabei sind ein oder mehrere Wirkstoffe in dem organischen Lösungsmittel suspendiert, weitere Wirkstoffe können in dem organischen Lösungsmittel gelöst sein.

In dem erfindungsgemäßen Ölsuspensionskonzentrat liegt der Dioxazin-Pyridyl-Sulfonylharnstoff a) in suspendierter Form in dem organischen Lösungsmittel vor. Dies bedeutet, daß der Hauptanteil (in Gew.-%) an Dioxazin-Pyridyl-Sulfonylharnstoff a) ungelöst in fein verteilter Form vorliegt, ein geringerer Teil des Dioxazin-Pyridyl-Sulfonylharnstoffes a) kann gelöst vorliegen. Vorzugsweise ist der Dioxazin-Pyridyl-Sulfonylharnstoff a) im organischen Lösungsmittel zu mehr als 50 Gew.-%, besonders bevorzugt zu mehr als 80 Gew.-% suspendiert, jeweils bezogen auf die Gesamtmenge an Dioxazin-Pyridyl-Sulfonylharnstoff a) in dem erfindungsgemäßen Ölsuspensionskonzentrat.

Bevorzugt sind Dioxazin-Pyridylsulfonylharnstoffe der allgemeinen Formel (I) 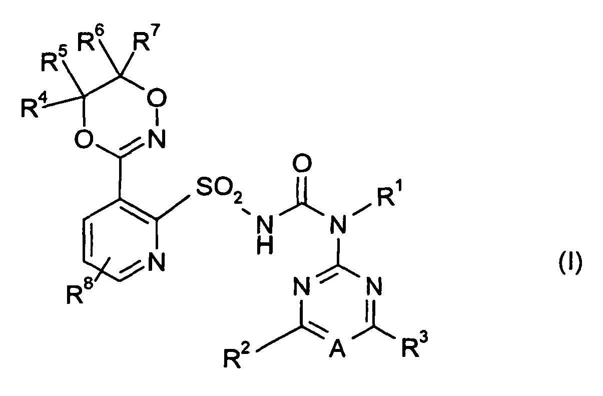 worin
A für Stickstoff oder eine CR¹¹-Gruppierung steht,
wobei
- R¹¹: für Wasserstoff, Alkyl, Halogen und Haloalkyl steht,
- R¹: für Wasserstoff oder einen gegebenenfalls substituierten Rest aus der Reihe Alkyl, Alkoxy, Alkoxyalkyl, Alkenyl, Alkinyl, Cycloalkyl, Cycloalkylalkyl, Aralkyl und Aryl steht,
- R²: für Wasserstoff, Halogen oder für jeweils gegebenenfalls durch Halogen substituiertes Alkyl, Alkoxy, Alkylthio, Alkylamino oder Dialkylamino mit jeweils 1 bis 6 Kohlenstoffatomen steht,
- R³: für Wasserstoff, Halogen oder für jeweils gegebenenfalls durch Halogen substituiertes Alkyl, Alkoxy, Alkylthio, Alkylamino oder Dialkylamino mit jeweils 1 bis 6 Kohlenstoffatomen steht,
- R⁴ - R⁷: unabhängig voneinander für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl, Alkylaminocarbonyl mit jeweils 1 bis 3 Kohlenstoffatomen stehen,
- R⁸: für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl, Alkylaminocarbonyl mit jeweils 1 bis 3 Kohlenstoffatomen steht,
wobei in den vorgenannten Resten die Alkyl- und Alkylengruppen jeweils 1 bis 6 C-Atome, die Alkenyl- und Alkinylgruppen jeweils 2 bis 6 C-Atome, die Cycloalkylgruppen jeweils 3 bis 6 C-Atome und die Arylgruppen jeweils 6 bzw. 10 C-Atome enthalten können.

Die Verbindungen der Formel (I) und deren Salze sind bekannt, ebenso wie deren Herstellung, z.B. aus US 5,476,936.

Bevorzugt sind Verbindungen der Formel (I) und deren Salze,
worin
- A: für Stickstoff oder eine CH-Gruppierung steht,
- R¹: für Wasserstoff oder einen gegebenenfalls durch Halogen substituierten Rest aus der Reihe Alkyl, Alkoxy, Alkoxyalkyl, Alkenyl und Alkinyl mit jeweils bis zu 3 Kohlenstoffatomen steht,
- R²: für Wasserstoff, Halogen oder für jeweils gegebenenfalls durch Halogen substituiertes Alkyl, Alkoxy, Alkylthio, Alkylamino oder Dialkylamino mit jeweils 1 bis 3 Kohlenstoffatomen in den Alkylresten steht,
- R³: für Wasserstoff, Halogen oder für jeweils gegebenenfalls durch Halogen substituiertes Alkyl, Alkoxy, Alkylthio, Alkylamino oder Dialkylamino mit jeweils 1 bis 3 Kohlenstoffatomen in den Alkylresten steht,
- R⁴ - R⁷: unabhängig voneinander für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl oder Alkylaminocarbonyl mit jeweils 1 bis 3 Kohlenstoffatomen in den Alkylresten steht,
- R⁸: für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl oder Alkylaminocarbonyl mit jeweils 1 bis 3 Kohlenstoffatomen in den Alkylresten steht.

Weiter bevorzugt sind Salze, die man aus Verbindungen der Formel (I) und Basen, wie z.B. Natrium-, Kalium- oder Calciumhydroxid, -hydrid, -amid und -carbonat, Natrium- oder Kalium-C₁-C₄-alkanolaten, Ammoniak, C₁-C₄-Alkylaminen, Di-(C₁-C₄-alkyl)-aminen oder Tri-(C₁-C₄-alkyl)-aminen, nach üblichen Verfahren erhält.

Insbesondere bevorzugt sind Verbindungen der Formel (I) und deren Salzen,
worin
- A: für Stickstoff oder eine CH-Gruppierung steht,
- R¹: für Wasserstoff, Methyl, Ethyl, Methoxy, Methoxymethyl oder Ethoxy steht,
- R²: für Wasserstoff, Chlor, Methyl, Ethyl, Trifluoromethyl, Methoxy, Ethoxy, Difluoromethoxy, Methylthio, Methylamino oder Dimethylamino steht,
- R³: für Wasserstoff, Chlor, Methyl, Ethyl, Trifluoromethyl, Methoxy, Ethoxy, Difluoromethoxy, Methylthio, Methylamino oder Dimethylamino steht,
- R⁴ - R⁷: unabhängig voneinander für Wasserstoff, Fluor, Chlor, Cyano, oder für jeweils gegebenenfalls durch Chlor oder Fluor substituiertes Methyl, Methylthio, Methylsulfinyl, Methylsulfonyl, Methoxycarbonyl und Ethoxycarbonyl steht, vorzugsweise für Wasserstoff,
- R⁸: für Wasserstoff, Fluor, Chlor, Brom, Cyano oder für jeweils gegebenenfalls durch Chlor oder Fluor substituiertes Methyl, Methoxy, Ethoxy, Methylthio, Ethylthio, Methylsulfinyl, Ethylsulfinyl, Methylsulfonyl, Ethylsulfonyl, Methyl- oder Dimethylamino steht, vorzugsweise für Wasserstoff.

Besonders bevorzugt sind Verbindungen der Formel (I) und deren Salze, insbesondere deren Alkalimetallsalze,
worin
- A: für Stickstoff steht,
- R¹: für Wasserstoff oder Methyl steht,
- R²: für Wasserstoff, Chlor, Methyl, Ethyl, Trifluoromethyl, Methoxy, Ethoxy, Difluoromethoxy, Methylthio, Methylamino oder Dimethylamino steht,
- R³: für Wasserstoff, Chlor, Methyl, Ethyl, Trifluoromethyl, Methoxy, Ethoxy, Difluoromethoxy, Methylthio, Methylamino oder Dimethylamino steht,
- R⁴ - R⁷: für Wasserstoff steht,
- R⁸: für Wasserstoff steht.

Ebenfalls besonders bevorzugt sind Verbindungen der Formel (I) und deren Salze, insbesondere deren Alkalimetallsalze,
worin
- A: für eine CH-Gruppierung steht,
- R¹: für Wasserstoff oder Methyl steht,
- R²: für Wasserstoff, Chlor, Methyl, Ethyl, Trifluoromethyl, Methoxy, Ethoxy, Difluoromethoxy, Methylthio, Methylamino oder Dimethylamino steht,
- R³: für Wasserstoff, Chlor, Methyl, Ethyl, Trifluoromethyl, Methoxy, Ethoxy, Difluoromethoxy, Methylthio, Methylamino oder Dimethylamino steht,
- R⁴ - R⁷: für Wasserstoff steht,
- R⁸: für Wasserstoff steht.

Die oben aufgeführten allgemeinen oder in Vorzugsbereichen aufgeführten Restedefinitionen können untereinander, also auch zwischen den angegebenen bevorzugten Bereichen beliebig kombiniert werden.

Die bei den Restedefinitionen genannten Kohlenwasserstoffreste, wie Alkyl, Alkenyl oder Alkinyl, auch in Kombinationen mit Heteroatomen, wie in Alkoxy, Alkylthio, Haloalkyl oder Alkylamino, sind auch dann, wenn dies nicht ausdrücklich angegeben ist, geradkettig oder verzweigt.

Die Dioxazin-Pyridylsulfonylharnstoffe a), z.B. solche der allgemeinen Formel (I), können auch als Salze vorliegen, z.B. als Metallsalze wie Alkali (z.B. Na, K) -Salze oder als Erdalkali (z.B. Ca, Mg) -Salze oder als Ammonium- oder Aminsalze. Man erhält solche Salze in einfacher Weise nach üblichen Salzbildungsmethoden, beispielsweise durch Lösen oder Dispergieren eines Dioxazin-Pyridylsulfonylharnstoffs, z.B. der Formel (I), in einem geeigneten Verdünnungsmittel, wie z.B. Methylenchlorid, Aceton, tert.-Butyl-methylether oder Toluol, und Zugabe einer geeigneten Base. Die Salze können dann - gegebenenfalls nach längerem Rühren - durch Einengen oder Absaugen isoliert werden.

Erfindungsgemäß bevorzugt enthaltene herbizide Wirkstoffe a) sind in der nachfolgenden Tabelle 1 genannt, worin folgende Abkürzungen verwendet werden:
Smp.: = Schmelzpunkt
(+) = Der angegebene Schmelzpunkt (Smp.) bezieht sich jeweils auf das entsprechende Natriumsalz, d.h. die entsprechende Verbindung, worin der Wasserstoff der -SO₂-NH-Gruppe durch Natrium ersetzt ist.

**Tabelle 1: Beispiele für Verbindungen der Formel (I) mit R⁴=R⁵=R⁶=R⁷=R⁸=H:**

| Bsp.- Nr. | R¹ | A | R² | R³ | Smp. (°C) |
|---|---|---|---|---|---|
| I-1 | H | CH | OCH₃ | OC₂H₅ | 154 |
| I-2 | H | CH | OCH₃ | CH₃ | |
| I-3 | H | CH | OHC₃ | CH₃ | 180-181⁽⁺⁾ |
| I-4 | H | CH | OCH₃ | C₂H₅ | |
| I-5 | H | CH | OCH₃ | CF₃ | |
| I-6 | H | CH | OCH₃ | OCF₂H | |
| I-7 | H | CH | OCH₃ | NHCH₃ | |
| I-8 | H | CH | OCH₃ | N(CH₃)₂ | 199.5 |
| I-9 | H | CH | OCH₃ | Cl | 110-111 |
| I-10 | H | CH | OCH₃ | Cl | 175-178⁽⁺⁾ |
| I-11 | H | CH | OCH₃ | OCH₃ | 167-168 |
| I-12 | H | CH | OCH₃ | OCH₃ | 171-172⁽⁺⁾ |
| I-13 | H | CH | OC₂H₅ | OC₂H₅ | |
| I-14 | H | CH | OC₂H₅ | OC₂H₅ | 152-154⁽⁺⁾ |
| I-15 | H | CH | OC₂H₅ | CH₃ | |
| I-16 | H | CH | OC₂H₅ | C₂H₅ | |
| I-17 | H | CH | OC₂H₅ | CF₃ | |
| I-18 | H | CH | OC₂H₅ | OCF₂H | |
| I-19 | H | CH | OC₂H₅ | NHCH₃ | |
| I-20 | H | CH | OC₂H₅ | N(CH₃)₂ | |
| I-21 | H | CH | OC₂H₅ | Cl | 158-159 |
| I-22 | H | CH | OC₂H₅ | Cl | 213⁽⁺⁾ |
| I-23 | H | CH | CH₃ | CH₃ | 153 |
| I-24 | H | CH | CH₃ | C₂H₅ | |
| I-25 | H | CH | CH₃ | CF₃ | |
| I-26 | H | CH | CH₃ | OCF₂H | |
| I-27 | H | CH | CH₃ | NHCH₃ | |
| I-28 | H | CH | CH₃ | N(CH₃)₂ | |
| I-29 | H | CH | CH₃ | Cl | 108-109 |
| I-30 | H | CH | CH₃ | Cl | >300⁽⁺⁾ |
| I-31 | H | CH | C₂H₅ | C₂H₅ | |
| I-32 | H | CH | C₂H₅ | CF₃ | |
| I-33 | H | CH | C₂H₅ | OCF₂H | |
| I-34 | H | CH | C₂H₅ | NHCH₃ | |
| I-35 | H | CH | C₂H₅ | Cl | |
| I-36 | H | CH | CF₃ | CF₃ | |
| I-37 | H | CH | CF₃ | OCF₂H | |
| I-38 | H | CH | CF₃ | NHCH₃ | |
| I-39 | H | CH | CF₃ | N(CH₃)₂ | |
| I-40 | H | CH | CF₃ | Cl | |
| I-41 | H | CH | OCF₂H | OCF₂H | |
| I-42 | H | CH | OCF₂H | NHCH₃ | |
| I-43 | H | CH | OCF₂H | N(CH₃)₂ | |
| I-44 | H | CH | OCF₂H | Cl | |
| I-45 | H | CH | NHCH₃ | NHCH₃ | |
| I-46 | H | CH | NHCH₃ | N(CH₃)₂ | |
| I-47 | H | CH | NHCH₃ | Cl | |
| I-48 | H | CH | N(CH₃)₂ | N(CH₃)₂ | |
| I-49 | H | CH | N(CH₃)₂ | Cl | |
| I-50 | H | CH | Cl | Cl | |
| I-51 | H | N | OCH₃ | OCH₃ | 255 |
| I-52 | H | N | OCH₃ | OCH₃ | 159-162⁽⁺⁾ |
| I-53 | H | N | OCH₃ | OC₂H₅ | |
| I-54 | H | N | OCH₃ | CH₃ | |
| I-55 | H | N | OCH₃ | C₂H₅ | |
| I-56 | H | N | OCH₃ | CF₃ | |
| I-57 | H | N | OCH₃ | OCF₂H | |
| I-58 | H | N | OCH₃ | NHCH₃ | |
| I-59 | H | N | OCH₃ | N(CH₃)₂ | |
| I-60 | H | N | OCH₃ | N(CH₃)₂ | 156⁽⁺⁾ |
| I-61 | H | N | OCH₃ | Cl | |
| I-62 | H | N | OC₂H₅ | OC₂H₅ | |
| I-63 | H | N | OC₂H₅ | CH₃ | |
| I-64 | H | N | OC₂H₅ | C₂H₅ | |
| I-65 | H | N | OC₂H₅ | CF₃ | |
| I-66 | H | N | OC₂H₅ | OCF₂H | |
| I-67 | H | N | OC₂H₅ | NHCH₃ | |
| I-68 | H | N | OC₂H₅ | N(CH₃)₂ | |
| I-69 | H | N | OC₂H₅ | Cl | |
| I-70 | H | N | OC₂H₅ | Cl | 213⁽⁺⁾ |
| I-71 | H | N | CH₃ | CH₃ | |
| I-72 | H | N | CH₃ | C₂H₅ | |
| I-73 | H | N | CH₃ | CF₃ | |
| I-74 | H | N | CH₃ | OCF₂H | |
| I-75 | H | N | CH₃ | NHCH₃ | |
| I-76 | H | N | CH₃ | N(CH₃)₂ | |
| I-77 | H | N | CH₃ | Cl | |
| I-78 | H | N | C₂H₅ | C₂H₅ | |
| I-79 | H | N | C₂H₅ | CF₃ | |
| I-80 | H | N | C₂H₅ | OCF₂H | |
| I-81 | H | N | C₂H₅ | NHCH₃ | |
| I-82 | H | N | C₂H₅ | Cl | |
| I-83 | H | N | CF₃ | CF₃ | |
| I-84 | H | N | CF₃ | OCF₂H | |
| I-85 | H | N | CF₃ | NHCH₃ | |
| I-86 | H | N | CF₃ | N(CH₃)₂ | |
| I-87 | H | N | CF₃ | Cl | |
| I-88 | H | N | OCF₂H | OCF₂H | |
| I-89 | H | N | OCF₂H | NHCH₃ | |
| I-90 | H | N | OCF₂H | N(CH₃)₂ | |
| I-91 | H | N | OCF₂H | Cl | |
| I-92 | H | N | NHCH₃ | NHCH₃ | |
| I-93 | H | N | NHCH₃ | N(CH₃)₂ | |
| I-94 | H | N | NHCH₃ | Cl | |
| I-95 | H | N | N(CH₃)₂ | N(CH₃)₂ | |
| I-96 | H | N | N(CH₃)₂ | Cl | |
| I-97 | H | N | Cl | Cl | |
| I-98 | CH₃ | N | OCH₃ | OCH₃ | |
| I-99 | CH₃ | N | OCH₃ | OC₂H₅ | |
| I-100 | CH₃ | N | OCH₃ | CH₃ | |
| I-101 | CH₃ | N | OCH₃ | C₂H₅ | |
| I-102 | CH₃ | N | OCH₃ | CF₃ | |
| I-103 | CH₃ | N | OCH₃ | OCF₂H | |
| I-104 | CH₃ | N | OCH₃ | NHCH₃ | |
| I-105 | CH₃ | N | OCH₃ | N(CH₃)₂ | |
| I-106 | CH₃ | N | OCH₃ | Cl | |
| I-107 | CH₃ | N | OC₂H₅ | OC₂H₅ | |
| I-108 | CH₃ | N | OC₂H₅ | CH₃ | |
| I-109 | CH₃ | N | OC₂H₅ | C₂H₅ | |
| I-110 | CH₃ | N | OC₂H₅ | CF₃ | |
| I-111 | CH₃ | N | OC₂H₅ | OCF₂H | |
| I-112 | CH₃ | N | OC₂H₅ | NHCH₃ | |
| I-113 | CH₃ | N | OC₂H₅ | N(CH₃)₂ | |
| I-114 | CH₃ | N | OC₂H₅ | Cl | |
| I-115 | CH₃ | N | CH₃ | CH₃ | |
| I-116 | CH₃ | N | CH₃ | C₂H₅ | |
| I-117 | CH₃ | N | CH₃ | CF₃ | |
| I-118 | CH₃ | N | CH₃ | OCF₂H | |
| I-119 | CH₃ | N | CH₃ | NHCH₃ | |
| I-120 | CH₃ | N | CH₃ | N(CH₃)₂ | |
| I-121 | CH₃ | N | CH₃ | Cl | |
| I-122 | CH₃ | N | C₂H₅ | C₂H₅ | |
| I-123 | CH₃ | N | C₂H₅ | CF₃ | |
| I-124 | CH₃ | N | C₂H₅ | OCF₂H | |
| I-125 | CH₃ | N | C₂H₅ | NHCH₃ | |
| I-126 | CH₃ | N | C₂H₅ | Cl | |
| I-127 | CH₃ | N | CF₃ | CF₃ | |
| I-128 | CH₃ | N | CF₃ | OCF₂H | |
| I-129 | CH₃ | N | CF₃ | NHCH₃ | |
| I-130 | CH₃ | N | CF₃ | N(CH₃)₂ | |
| I-131 | CH₃ | N | CF₃ | Cl | |
| I-132 | CH₃ | N | OCF₂H | OCF₂H | |
| I-133 | CH₃ | N | OCF₂H | NHCH₃ | |
| I-134 | CH₃ | N | OCF₂H | N(CH₃)₂ | |
| I-135 | CH₃ | N | OCF₂H | Cl | |
| I-136 | CH₃ | N | NHCH₃ | NHCH₃ | |
| I-137 | CH₃ | N | NHCH₃ | N(CH₃)₂ | |
| I-138 | CH₃ | N | NHCH₃ | Cl | |
| I-139 | CH₃ | N | N(CH₃)₂ | N(CH₃)₂ | |
| I-140 | CH₃ | N | N(CH₃)₂ | Cl | |
| I-141 | CH₃ | N | Cl | Cl | |
| I-142 | H | N | N(CH₃)₂ | OCH₂CF₃ | 158 |
| I-143 | H | CH | Cl | OCH₂CF₃ | 204-205 |
| I-144 | H | CH | Cl | OCH₂CF₃ | |
| I-145 | H | CH | Cl | OCH₂CF₃ | 207⁽⁺⁾ |

Unter den in den erfindungsgemäßen Ölsuspensionskonzentraten als Komponente a) enthaltenen Dioxazin-Pyridyl-Sulfonylharnstoffen werden im Sinne der vorliegenden Erfindung stets sämtliche Anwendungsformen wie Säuren, Ester, Salze und Isomere wie Stereoisomere und optische Isomere verstanden. So sind neben den neutralen Verbindungen stets auch deren Salze, z.B. mit anorganischen und/oder organischen Gegenionen zu verstehen. So können Sulfonylharnstoffe z.B. Salze bilden, bei denen der Wasserstoff der -SO₂-NH-Gruppe durch ein für die Landwirtschaft geeignetes Kation ersetzt ist. Diese Salze sind beispielsweise Metallsalze, insbesondere Alkalimetallsalze oder Erdalkalimetallsalze, insbesondere Natrium- und Kaliumsalze, oder auch Ammoniumsalze oder Salze mit organischen Aminen. Ebenso kann Salzbildung durch Anlagerung einer Säure an basischen Gruppen, wie z.B. Amino und Alkylamino, erfolgen. Geeignete Säuren hierfür sind starke anorganische und organische Säuren, beispielsweise HCl, HBr, H₂SO₄ oder HNO₃. Bevorzugte Ester sind die Alkylester, insbesondere die C₁-C₁₀-Alkylester wie Methylester.

Soweit in dieser Beschreibung der Begriff Acylrest verwendet wird, bedeutet dieser den Rest einer organischen Säure, der formal durch Abspaltung einer OH-Gruppe aus der organischen Säure entsteht, z.B. der Rest einer Carbonsäure und Reste davon abgeleiteter Säuren wie der Thiocarbonsäure, gegebenenfalls N-substituierten Iminocarbonsäuren oder die Reste von Kohlensäuremonoestern, gegebenenfalls N-substituierter Carbaminsäuren, Sulfonsäuren, Sulfinsäuren, Phosphonsäuren, Phosphinsäuren.

Ein Acylrest ist bevorzugt Formyl oder Acyl aus der Gruppe CO-R^{z}, CS-R^{z}, CO-OR^{z}, CS-OR^{z}, CS-SR^{z}, SOR^{z} oder SO₂R^{z}, wobei R^{z} jeweils einen C₁-C₁₀-Kohlenwasserstoffrest wie C₁-C₁₀-Alkyl oder C₆-C₁₀-Aryl bedeutet, der unsubstituiert oder substituiert ist, z.B. durch einen oder mehrere Substituenten aus der Gruppe Halogen wie F, Cl, Br, I, Alkoxy, Haloalkoxy, Hydroxy, Amino, Nitro, Cyano oder Alkylthio, oder R^{z} bedeutet Aminocarbonyl oder Aminosulfonyl, wobei die beiden letztgenannten Reste unsubstituiert, N-monosubstituiert oder N,N-disubstituiert sind, z.B. durch Substituenten aus der Gruppe Alkyl oder Aryl.

Acyl bedeutet beispielsweise Formyl, Halogenalkylcarbonyl, Alkylcarbonyl wie (C₁-C₄)Alkylcarbonyl, Phenylcarbonyl, wobei der Phenylring substituiert sein kann, oder Alkyloxycarbonyl, wie (C₁-C₄) Alkyloxycarbonyl, Phenyloxycarbonyl, Benzyloxycarbonyl, Alkylsulfonyl, wie (C₁-C₄)Alkylsulfonyl, Alkylsulfinyl, wie C₁-C₄ (Alkylsulfinyl), N-Alkyl-1-iminoalkyl, wie N-(C₁-C₄)-1-imino-(C₁-C₄)alkyl und andere Reste von organischen Säuren.

Ein Kohlenwasserstoffrest bedeutet ein geradkettiger, verzweigter oder cyclischer und gesättigter oder ungesättigter aliphatischer oder aromatischer Kohlenwasserstoffrest, z.B. Alkyl, Alkenyl, Alkinyl, Cycloalkyl, Cycloalkenyl oder Aryl. Ein Kohlenwasserstoffrest weist bevorzugt 1 bis 40 C-Atome, vorzugsweise 1 bis 30 C-Atome auf; besonders bevorzugt bedeutet ein Kohlenwasserstoffrest Alkyl, Alkenyl oder Alkinyl mit bis zu 12 C-Atomen oder Cycloalkyl mit 3, 4, 5, 6 oder 7 Ringatomen oder Phenyl.

Aryl bedeutet ein mono-, bi- oder polycyclisches aromatisches System, beispielsweise Phenyl, Naphthyl, Tetrahydronaphthyl, Indenyl, Indanyl, Pentalenyl, Fluorenyl und ähnliches, vorzugsweise Phenyl.

Ein heterocyclischer Rest oder Ring (Heterocyclyl) kann gesättigt, ungesättigt oder heteroaromatisch und unsubstituiert oder substituiert sein; er enthält vorzugsweise ein oder mehrere Heteroatome im Ring, vorzugsweise aus der Gruppe N, O und S; vorzugsweise ist er ein aliphatischer Heterocyclylrest mit 3 bis 7 Ringatomen oder ein heteroaromatischer Rest mit 5 oder 6 Ringatomen und enthält 1, 2 oder 3 Heteroatome. Der heterocyclische Rest kann z.B. ein heteroaromatischer Rest oder Ring (Heteroaryl) sein, wie z.B. ein mono-, bi- oder polycyclisches aromatisches System, in dem mindestens 1 Ring ein oder mehrere Heteroatome enthält, beispielsweise Pyridyl, Pyrimidinyl, Pyridazinyl, Pyrazinyl, Triazinyl, Thienyl, Thiazolyl, Oxazolyl, Furyl, Pyrrolyl, Pyrazolyl und Imidazolyl, oder ist ein partiell oder vollständig hydrierter Rest wie Oxiranyl, Oxetanyl, Pyrrolidyl, Piperidyl, Piperazinyl, Triazolyl, Dioxolanyl, Morpholinyl, Tetrahydrofuryl. Bevorzugt sind Pyrimidinyl und Triazinyl. Als Substituenten für einen substituierten heterocyclischen Rest kommen die weiter unten genannten Substituenten in Frage, zusätzlich auch Oxo. Die Oxogruppe kann auch an den Heteroringatomen, die in verschiedenen Oxidationsstufen existieren können, z.B. bei N und S, auftreten.

Substituierte Reste, wie substituierte Kohlenwasserstoffreste, z.B. substituiertes Alkyl, Alkenyl, Alkinyl, Aryl, Phenyl und Benzyl, oder substituiertes Heterocyclyl oder Heteroaryl, bedeuten beispielsweise einen vom unsubstituierten Grundkörper abgeleiteten substituierten Rest, wobei die Substituenten beispielsweise einen oder mehrere, vorzugsweise 1, 2 oder 3 Reste aus der Gruppe Halogen, Alkoxy, Haloalkoxy, Alkylthio, Hydroxy, Amino, Nitro, Carboxy, Cyano, Azido, Alkoxycarbonyl, Alkylcarbonyl, Formyl, Carbamoyl, Mono- und Dialkylaminocarbonyl, substituiertes Amino, wie Acylamino, Mono- und Dialkylamino, und Alkylsulfinyl, Haloalkylsulfinyl, Alkylsulfonyl, Haloalkylsulfonyl und, im Falle cyclischer Reste, auch Alkyl und Haloalkyl sowie den genannten gesättigten kohlenwasserstoffhaltigen Resten entsprechende ungesättigte aliphatische Reste, wie Alkenyl, Alkinyl, Alkenyloxy, Alkinyloxy etc. bedeuten. Bei Resten mit C-Atomen sind solche mit 1 bis 4 C-Atomen, insbesondere 1 oder 2 C-Atomen, bevorzugt. Bevorzugt sind in der Regel Substituenten aus der Gruppe Halogen, z.B. Fluor und Chlor, (C₁-C₄)Alkyl, vorzugsweise Methyl oder Ethyl, (C₁-C₄)Haloalkyl, vorzugsweise Trifluormethyl, (C₁-C₄)Alkoxy, vorzugsweise Methoxy oder Ethoxy, (C₁-C₄)Haloalkoxy, Nitro und Cyano. Besonders bevorzugt sind dabei die Substituenten Methyl, Methoxy und Chlor.

Gegebenenfalls substituiertes Phenyl ist vorzugsweise Phenyl, das unsubstituiert oder ein- oder mehrfach, vorzugsweise bis zu dreifach durch gleiche oder verschiedene Reste, vorzugsweise aus der Gruppe Halogen, (C₁-C₄)Alkyl, (C₁-C₄)Alkoxy, (C₁-C₄)Halogenalkyl, (C₁-C₄)Halogenalkoxy und Nitro substituiert ist, z.B. o-, m- und p-Tolyl, Dimethylphenyl, 2-, 3- und 4-Chlorphenyl, 2-, 3- und 4-Trifluor- und -Trichlorphenyl, 2,4-, 3,5-, 2,5- und 2,3-Dichlorphenyl, o-, m- und p-Methoxyphenyl.

Cycloalkyl bedeutet ein carbocyclisches, gesättigtes Ringsystem vorzugsweise mit 3-6 C-Atomen, z.B. Cyclopropyl, Cyclobutyl, Cyclopentyl oder Cyclohexyl.

Die kohlenstoffhaltigen Reste wie Alkyl, Alkoxy, Haloalkyl, Haloalkoxy, Alkylamino und Alkylthio sowie die entsprechenden ungesättigten und/oder substituierten Reste im Kohlenstoffgerüst jeweils geradkettig oder verzweigt sein. Wenn nicht speziell angegeben, sind bei diesen Resten die niederen Kohlenstoffgerüste, z.B. mit 1 bis 6 C-Atomen bzw. bei ungesättigten Gruppen mit 2 bis 6 C-Atomen, bevorzugt. Alkylreste, auch in den zusammengesetzten Bedeutungen wie Alkoxy, Haloalkyl usw., bedeuten z.B. Methyl, Ethyl, n- oder i-Propyl, n-, i-, t- oder 2-Butyl, Pentyle, Hexyle, wie n-Hexyl, i-Hexyl und 1,3-Dimethylbutyl, Heptyle, wie n-Heptyl, 1-Methylhexyl und 1,4-Dimethylpentyl; Alkenyl- und Alkinylreste haben die Bedeutung der den Alkylresten entsprechenden möglichen ungesättigten Reste; Alkenyl bedeutet z.B. Allyl, 1-Methylprop-2-en-1-yl, 2-Methyl-prop-2-en-1-yl, But-2-en-1-yl, But-3-en-1-yl, 1-Methyl-but-3-en-1-yl und 1-Methyl-but-2-en-1-yl; Alkinyl bedeutet z.B. Propargyl, But-2-in-1-yl, But-3-in-1-yl, 1-Methyl-but-3-in-1-yl.

Halogen bedeutet beispielsweise Fluor, Chlor, Brom oder Iod. Haloalkyl, -alkenyl und -alkinyl bedeuten durch Halogen, vorzugsweise durch Fluor, Chlor und/oder Brom, insbesondere durch Fluor oder Chlor, teilweise oder vollständig substituiertes Alkyl, Alkenyl bzw. Alkinyl, z.B. CF₃, CHF₂, CH₂F, CF₃CF₂, CH₂FCHCl, CCl₃, CHCl₂, CH₂CH₂Cl; Haloalkoxy ist z.B. OCF₃, OCHF₂, OCH₂F, CF₃CF₂O, OCH₂CF₃ und OCH₂CH₂Cl; entsprechendes gilt für Haloalkenyl und andere durch Halogen substituierte Reste.

Die Herbizide (a) hemmen das Enzym Acetolactatsynthase (ALS) und damit die Proteinsynthese in Pflanzen. Die Aufwandmenge der Herbizide (a) kann in einem weiten Bereich variieren, beispielsweise zwischen 0,001 g und 500 g AS/ha (AS/ha bedeutet dabei im folgenden "Aktivsubstanz pro Hektar" = bezogen auf 100%igen Wirkstoff). Bei Anwendungen mit Aufwandmengen von 0,01 g bis 200 g AS/ha der Herbizide (a), vorzugsweise der Verbindungen I-1 bis I-145, wird im Vor- und Nachauflaufverfahren ein relativ breites Spektrum an Schadpflanzen bekämpft, z.B. an annuellen und perennierenden mono- oder dikotylen Unkräutern sowie an unerwünschten Kulturpflanzen. Bei den erfindungsgemäßen Kombinationen liegen die Aufwandmengen in der Regel niedriger, z. B. im Bereich von 0,001 g bis 100 g AS/ha, vorzugsweise 0,005 g bis 50 g AS/ha, besonders bevorzugt 0,01 g bis 9 g AS/ha.

Die Herbizide (a) sind z.B. zur Bekämpfung von Schadpflanzen in Pflanzenkulturen geeignet, beispielsweise in wirtschaftlich bedeutenden Ackerbaukulturen z.B. monokotylen Ackerbaukulturen wie Getreide (z.B. Weizen, Gerste, Roggen, Hafer), Reis, Mais, Hirse, oder dikotylen Ackerbaukulturen wie Zuckerrübe, Raps, Baumwolle, Sonnenblumen und Leguminosen z.B. der Gattungen Glycine (z.B. Glycine max. (Soja) wie nicht-transgene Glycine max. (z.B. konventionelle Sorten wie STS-Sorten) oder transgene Glycine max. (z.B. RR-Soja oder LL-Soja) und deren Kreuzungen), Phaseolus, Pisum, Vicia und Arachis, oder Gemüsekulturen aus verschiedenen botanischen Gruppen wie Kartoffel, Lauch, Kohl, Karotte, Tomate, Zwiebel, sowie Dauer- und Plantagenkulturen wie Kern- und Steinobst, Beerenobst, Wein, Hevea, Bananen, Zuckerrohr, Kaffee, Tee, Citrus, Nussplantagen, Rosen, Palmenkulturen und Forstkulturen. Für die Anwendung von Herbizid-Kombinationen (a)+(e) sind diese Kulturen ebenfalls bevorzugt. Für die Herbizid-Kombinationen (a)+(e4) sind vor allem gegenüber den Herbiziden (e4) tolerante Mutantenkulturen und tolerante transgene Kulturen von besonderem Interesse, vorzugsweise Mais, Reis, Getreide, Raps und Soja, insbesondere Soja, die gegen Imidazolinon-Herbizide, Glufosinate oder Glyphosate resistent sind.

Die Herbizide (a) können auch nicht-selektiv zur Bekämpfung unerwünschten Pflanzenwuchses eingesetzt werden, z.B. in Dauer- und Plantagenkulturen, an Wegrändern, Plätzen, Industrieanlagen, Flugplätzen oder Eisenbahnanlagen, oder zur sogenannten Bum-Down-Anwendung, z.B. in Ackerbaukulturen z.B. monokotylen Ackerbaukulturen wie Getreide (z.B. Weizen, Gerste, Roggen, Hafer), Reis, Mais, Hirse, oder dikotylen Ackerbaukulturen wie Zuckerrübe, Raps, Baumwolle, Sonnenblumen und Leguminosen z.B. der Gattungen Glycine (z.B. Glycine max. (Soja) wie nicht-transgene Glycine max. (z.B. konventionelle Sorten wie STS-Sorten) oder transgene Glycine max. (z.B. RR-Soja oder LL-Soja) und deren Kreuzungen), Phaseolus, Pisum, Vicia und Arachis, oder Gemüsekulturen aus verschiedenen botanischen Gruppen wie Kartoffel, Lauch, Kohl, Karotte, Tomate, Zwiebel.

Die herbiziden Wirkstoffe a) aus der Reihe der Dioxazin-Pyridyl-Sulfonylharnstoffe sind in den erfindungsgemäßen Ölsuspensionskonzentraten im allgemeinen in Mengen von 0,01 bis 50 Gew.-%, bevorzugt 0,1 bis 30 Gew.-% enthalten, dabei bezieht sich die Angabe "Gew.-%" hier und in der gesamten Beschreibung, wenn nicht anders definiert, auf das relative Gewicht der jeweiligen Komponente bezogen auf das Gesamtgewicht der Formulierung.

Als organische Lösungsmittel (Komponente b) kommen z.B. in Frage:
1) Kohlenwasserstoffe, die unsubstituiert oder substituiert sein können, z.B.
   1a) aromatische Kohlenwasserstoffe, z.B.
      . ein- oder mehrfach alkyl-substituierte Benzole wie Toluol, Xylole, Mesitylen, Ethylbenzol, oder
      . ein- oder mehrfach alkyl-substituierte Naphthaline wie 1-Methylnaphthalin, 2-Methylnaphthalin oder Dimethylnaphthalin, oder
      . andere vom Benzol abgeleitete aromatische Kohlenwasserstoffe, wie Indan oder Tetralin^{®} , oder
      . Gemische hieraus,
   1 b) aliphatische Kohlenwasserstoffe, z.B.
      . lineare oder verzweigte Aliphaten, z.B. der allgemeinen Formel CₙH₂ₙ₊₂, wie Pentan, Hexan, Octan, 2-Methylbutan oder 2,2,4-Trimethylpentan, oder
      . cyclische, gegebenenfalls alkyl-substituierte Aliphaten, wie Cyclohexan oder Methylcyclopentan, oder
      . Gemische hieraus, wie Lösungsmittel der Exxsol^{®}D-Reihe, Isopar^{®}-Reihe oder Bayol^{®}-Reihe z.B. Bayol^{®}82 (ExxonMobil Chemicals) oder der Isane^{®}IP-Reihe oder Hydroseal^{®}G-Reihe (TotalFinaElf),
   1c)Gemische von aromatischen und aliphatischen Kohlenwasserstoffen, wie Lösungsmittel der Solvesso^{®}-Reihe z.B. Solvesso^{®}100, Solvesso^{®}150 oder Solvesso^{®}200 (ExxonMobil Chemicals), der Solvarex^{®}/Solvaro^{®}-Reihe (TotalFinaElf) oder der Caromax^{®}-Reihe z.B. Caromax^{®}28 (Petrochem Carless), oder
   1d) halogenierte Kohlenwasserstoffe wie halogenierte aromatische und aliphatische Kohlenwasserstoffe, wie Chlorbenzol oder Methylenchlorid, oder
2) polare Lösungsmittel, z.B. aprotische, polare Lösungsmittel, wie Vollether und Vollester von C₁-C₉-Alkansäuren, die mono-, di- oder polyfunktional sein können, z.B. die Ether und Ester mit C₁-C₁₈-Alkylalkoholen, Ketone mit geringer Tautomerietendenz, Phophorsäureester, Amide, Nitrile oder Sulfone, z.B. Diisobutyladipat, Rhodiasolv^{®} RPDE (Rhodia), Cyclohexanon, Jeffsol^{®}PC (Huntsman), γ-Butyrolacton, N-Methylpyrrolidon, Dimethylsulfoxid, Acetonitril, Tributylphosphatam oder Hostarex^{®}PO-Reihe (Clariant), oder protische polare Lösungsmittel wie Alkohole, Amine oder Carbonsäuren. Die Alkohole, Amine oder Carbonsäuren, weisen bevorzugt 1 bis 18 C-Atome auf und können linear, verzweigt oder cyclisch, gesättigt oder ungesättigt sein, gegebenenfalls Heteroatome enthalten und ein- oder mehrfach funktionalisiert sein. Beispiele für Alkohole sind monofunktionelle C₁-C₁₀-Alkohole wie Methanol, Ethanol, Propanol, Isopropanol, Heptanol, Octanol, Isooctanol oder Phenol, oder Polyole wie Glycerin oder Polygykole, kommerziell z.B. erhältlich als Exxal^{®}-Reihe (ExxonMobil), Agrisynth^{®} PA (ISP), Arcosolv^{®}-Reihe (Lyondell Chemical) oder Nacol^{®} 6-98 (DEA). Beispiele für Amine sind Diethylamin, Hexylamin oder Anilin. Beispiele für Carbonsäuren sind Adipinsäure und Adipinsäuremonoester.
3) Fettsäureester, z.B. natürlichen Ursprungs, z.B. natürliche Öle wie tierische Öle oder Pflanzenöle, oder synthetischen Ursprungs, z.B. Edenor^{®}-Reihe z.B. Edenor^{®}MEPa oder Edenor^{®}MESU oder Agnique^{®}ME-Reihe oder Agnique^{®}AE-Reihe (Cognis), Salim^{®}ME-Reihe (Salim), Radia^{®}-Reihe z.B. Radia^{®}30167 (ICI), Prilube^{®}-Reihe z.B. Prilube^{®}1530 (Petrofina), Stepan^{®}C-Reihe (Stepan) oder Witconol^{©}23-Reihe (Witco). Die Fettsäureester sind bevorzugt Ester von C₁₀-C₂₂-, vorzugsweise C₁₂-C₂₀-Fettsäuren. Die C₁₀-C₂₂-Fettsäureester sind beispielsweise Ester ungesättigter oder gesättigter C₁₀-C₂₂-Fettsäuren, insbesondere mit gerader Kohlenstoffatomzahl, z.B. Erucasäure, Laurinsäure, Palmitinsäure und insbesondere C₁₈-Fettsäuren wie Stearinsäure, Ölsäure, Linolsäure oder Linolensäure.

Beispiele für Fettsäureester wie C₁₀-C₂₂-Fettsäure-Ester sind Glycerin- und Glykolester von Fettsäuren wie C₁₀-C₂₂-Fettsäuren oder deren Umesterungsprodukte, z.B. Alkyl-Fettsäureester wie C₁-C₂₀-Alkyl-C₁₀-C₂₂-Fettsäure-Ester, wie sie z.B. durch Umesterung der vorgenannten Glycerin- oder Glykol-Fettsäureester wie C₁₀-C₂₂-Fettsäure-Ester mit C₁-C₂₀-Alkoholen (z.B. Methanol, Ethanol, Propanol oder Butanol) erhalten werden können. Die Umesterung kann nach bekannten Methoden erfolgen, wie sie z.B. beschrieben sind im Römpp Chemie Lexikon, 9. Auflage, Band 2, Seite 1343, Thieme Verlag Stuttgart.

Als Alkyl-Fettsäureester wie C₁-C₂₀-Alkyl-C₁₀-C₂₂-Fettsäure-Ester bevorzugt sind Methylester, Ethylester, Propylester, Butylester, 2-ethyl-hexylester und Dodecylester. Als Glykol- und Glycerin-Fettsäureester wie C₁₀-C₂₂-FettsäureEster bevorzugt sind die einheitlichen oder gemischten Glykolester und Glycerinester von C₁₀-C₂₂-Fettsäuren, insbesondere solcher Fettsäuren mit gerader Anzahl an Kohlenstoffatomen, z.B. Erucasäure, Laurinsäure, Palmitinsäure und insbesondere C₁₈-Fettsäuren wie Stearinsäure, Ölsäure, Linolsäure oder Linolensäure.

Tierische Öle b) sind allgemein bekannt und kommerziell erhältlich. Unter dem Begriff tierische Öle im Sinne der vorliegenden Erfindung werden z.B. Öle tierischen Ursprungs verstanden wie Waltranöl, Lebertranöl, Moschusöl oder Nerzöl.

Pflanzenöle b) sind allgemein bekannt und kommerziell erhältlich. Unter dem Begriff Pflanzenöle im Sinne der vorliegenden Erfindung werden z.B. Öle aus ölliefemden Pflanzenarten wie Sojaöl, Rapsöl, Maiskeimöl, Sonnenblumenöl, Baumwollsaatöl, Leinöl, Kokosöl, Palmöl, Distelöl, Walnussöl, Erdnussöl, Olivenöl oder Rhizinusöl, insbesondere Rapsöl verstanden, wobei unter den Pflanzenölen auch deren Umesterungsprodukte verstanden werden, z.B. Alkylester wie Rapsölmethylester oder Rapsölethylester.

Die Pflanzenöle sind bevorzugt Ester von C₁₀-C₂₂-, vorzugsweise C₁₂-C₂₀-Fettsäuren. Die C₁₀-C₂₂-Fettsäureester sind beispielsweise Ester ungesättigter oder gesättigter C₁₀-C₂₂-Fettsäuren, insbesondere mit gerader Kohlenstoffatomzahl, z.B. Erucasäure, Laurinsäure, Palmitinsäure und insbesondere C₁₈-Fettsäuren wie Stearinsäure, Ölsäure, Linolsäure oder Linolensäure.

Beispiele für Pflanzenöle sind C₁₀-C₂₂-Fettsäure-Ester von Glycerin oder Glykol mit den C₁₀-C₂₂-Fettsäuren, oder C₁-C₂₀-Alkyl-C₁₀-C₂₂-Fettsäure-Ester, wie sie z.B. durch Umesterung der vorgenannten Glycerin- oder Glykol-C₁₀-C₂₂-Fettsäure-Ester mit C₁-C₂₀-Alkoholen (z.B. Methanol, Ethanol, Propanol oder Butanol) erhalten werden können. Die Umesterung kann nach bekannten Methoden erfolgen, wie sie z.B. beschrieben sind im Römpp Chemie Lexikon, 9. Auflage, Band 2, Seite 1343, Thieme Verlag Stuttgart.

Die Pflanzenöle können in den erfindungsgemäßen Ölsuspensionskonzentraten z.B. in Form kommerziell erhältlicher Pflanzenöle, insbesondere Rapsöle wie Rapsölmethylester, z.B. Phytorob®B (Novance, Frankreich), Edenor® MESU und Agnique®ME-Reihe (Cognis, Deutschland) Radia^{®}-Reihe (ICI), Prilube^{®}-Reihe (Petrofina) oder Biodiesel oder in Form kommerziell erhältlicher pflanzenölhaltiger Formulierungszusatzstoffe, insbesondere solcher auf Basis von Rapsölen wie Rapsölmethylester, z.B. Hasten® (Victorian Chemical Company, Australien, nachfolgend Hasten genannt, Hauptbestandteil: Rapsölethylester), Actirob®B (Novance, Frankreich, nachfolgend ActirobB genannt, Hauptbestandteil: Rapsölmethylester), Rako-Binol® (Bayer AG, Deutschland, nachfolgend Rako-Binol genannt, Hauptbestandteil: Rapsöl), Renol® (Stefes, Deutschland, nachfolgend Renol genannt, Pflanzenölbestandteil: Rapsölmethylester) oder Stefes Mero® (Stefes, Deutschland, nachfolgend Mero genannt, Hauptbestandteil: Rapsölmethylester) enthalten sein.

Beispiele für synthetische Fettsäureester sind z.B. solche die sich von Fettsäuren mit ungerader Kohlenstoffatomanzahl ableiten, wie C₁₁-C₂₁-Fettsäureester.

Bevorzugte organische Lösungsmittel sind aromatische Kohlenwasserstoffe, aliphatische Kohlenwasserstoffe und Fettsäureester wie pflanzliche Öle wie Triglyceride von Fettsäuren mit 10 bis 22 C-Atomen, die sowohl gesättigt als auch ungesättigt, linear oder verzweigt sein können und gegebenenfalls weitere funktionelle Gruppen tragen, wie Maiskeimöl, Rapsöl, Sonnenblumenkernöl, Baumwollsaatöl, Leinöl, Sojaöl, Kokosöl, Palmöl, Distelöl oder Rizinusöl, und deren Umesterungsprodukte wie Fettsäurealkylester, sowie Mischungen hieraus.

Die Lösungsmittel können allein oder im Gemisch enthalten sein. Das verwendete Lösungsmittel bzw. Lösungsmittelgemisch weist bevorzugt ein geringes Lösevermögen für das verwendete bzw. die verwendeten Dioxazin-Pyridyl-Sulfonylharnstoffe (Komponente a)) auf.

Der Gesamtlösungsmittelanteil in den erfindungsgemäßen Ölsuspensionskonzentraten liegt im allgemeinen zwischen 5 und 95 Gew.-%, bevorzugt im Bereich zwischen 20 und 80 Gew.-%. Der Anteil an polaren Lösungsmitteln wie aprotischen, polaren liegt im allgemeinen unter 20 Gew.-%, bevorzugt im Bereich von 0 bis 10 Gew.-%.

Als optionale Komponente e) sind in den erfindungsgemäßen Ölsuspensionskonzentraten Safener enthalten, die geeignet sind, Schäden an der Kulturpflanze zu reduzieren oder zu vermeiden. Geeignete Safener sind z.B. aus WO-A-96/14747 und der dort zitierten Literatur bekannt. Die Safener können in dem organischen Lösungsmittel in suspendierter und/oder in gelöster Form, vorzugsweise in gelöster Form vorliegen.

Folgende Gruppen von Verbindungen sind beispielsweise als Safener geeignet:
1) Verbindungen vom Typ der Dichlorphenylpyrazolin-3-carbonsäure (S1), vorzugsweise Verbindungen wie 1-(2,4-Dichlorphenyl)-5-(ethoxycarbonyl)-5-methyl-2-pyrazolin-3-carbonsäureethylester (S1-1, Mefenpyr-diethyl, PM S. 781 - 782), und verwandte Verbindungen, wie sie in der WO 91/07874 beschrieben sind,
2) Derivate der Dichlorphenylpyrazolcarbonsäure, vorzugsweise Verbindungen wie 1-(2,4-Dichlorphenyl)-5-methyl-pyrazol-3-carbonsäureethylester (S1-2), 1-(2,4-Dichlorphenyl)-5-isopropyl-pyrazol-3-carbonsäureethylester (S1-3), 1-(2,4-Dichlorphenyl)-5-(1,1-dimethyl-ethyl)pyrazol-3-carbonsäureethyl-ester (S1-4), 1-(2,4-Dichlorphenyl)-5-phenyl-pyrazol-3-carbonsäureethylester (S1 -5) und verwandte Verbindungen, wie sie in EP-A-333 131 und EP-A-269 806 beschrieben sind.
3) Verbindungen vom Typ der Triazolcarbonsäuren, vorzugsweise Verbindungen wie Fenchlorazol, d.h. 1-(2,4-Dichlorphenyl)-5-trichlormethyl-(1H)-1,2,4-triazol-3-carbonsäureethylester (S1-6, Fenchlorazol-ethyl, PM S. 385-386), und verwandte Verbindungen (siehe EP-A-174 562 und EP-A-346 620);
4) Verbindungen vom Typ der 5-Benzyl- oder 5-Phenyl-2-isoxazolin-3-carbonsäure, oder der 5,5-Diphenyl-2-isoxazolin-3-carbonsäure vorzugsweise Verbindungen wie 5-(2,4-Dichlorbenzyl)-2-isoxazolin-3-carbonsäureethylester (S1-7) oder 5-Phenyl-2-isoxazolin-3-carbonsäureethylester (S1-8) und verwandte Verbindungen, wie sie in WO 91/08202 beschrieben sind, bzw. der 5,5-Diphenyl-2-isoxazolin-carbonsäureethylester (S1-9, Isoxadifen-ethyl) oder -n-propylester (S1-10) oder der 5-(4-Fluorphenyl)-5-phenyl-2-isoxazolin-3-carbonsäureethylester (S1-11), wie sie in der Patentanmeldung (WO-A-95/07897) beschrieben sind.
5) Verbindungen vom Typ der 8-Chinolinoxyessigsäure (S2), vorzugsweise (5-Chlor-8-chinolinoxy)-essigsäure-(1-methyl-hex-1-yl)-ester (S2-1 Cloquintocet-mexyl, PM S. 263 - 264), (5-Chlor-8-chinolinoxy)-essigsäure-(1,3-dimethyl-but-1-yl)-ester (S2-2), (5-Chlor-8-chinolinoxy)-essigsäure-4-allyl-oxy-butylester (S2-3), (5-Chlor-8-chinolinoxy)-essigsäure-1-allyloxy-prop-2-ylester (S2-4), (5-Chlor-8-chinolinoxy)-essigsäureethylester (S2-5), (5-Chlor-8-chinolinoxy)-essigsäuremethylester (S2-6), (5-Chlor-8-chinolinoxy)-essigsäureallylester (S2-7), (5-Chlor-8-chinolinoxy)-essigsäure-2-(2-propyliden-iminoxy)-1-ethylester (S2-8), (5-Chlor-8-chinolinoxy)-essigsäure-2-oxo-prop-1-ylester (S2-9) und verwandte Verbindungen, wie sie in EP-A-86 750, EP-A-94 349 und EP-A-191 736 oder EP-A-0 492 366 beschrieben sind.
6) Verbindungen vom Typ der (5-Chlor-8-chinolinoxy)-malonsäure, vorzugsweise Verbindungen wie (5-Chlor-8-chinolinoxy)-malonsäurediethylester, (5-Chlor-8-chinolinoxy)-malonsäurediallylester, (5-Chlor-8-chinolinoxy)-malonsäure-methyl-ethylester und verwandte Verbindungen, wie sie in EP-A-0 582 198 beschrieben sind.
7) Wirkstoffe vom Typ der Phenoxyessig- bzw. -propionsäurederivate bzw. der aromatischen Carbonsäuren, wie z.B. 2,4-Dichlorphenoxyessigsäure(ester) (2,4-D), 4-Chlor-2-methyl-phenoxy-propionester (Mecoprop), MCPA oder 3,6-Dichlor-2-methoxy-benzoesäure(ester) (Dicamba).
8) Wirkstoffe vom Typ der Pyrimidine, wie "Fenclorim" (PM, S. 512-511) (= 4,6-Dichlor-2-phenylpyrimidin),
9) Wirkstoffe vom Typ der Dichloracetamide, die häufig als Vorauflaufsafener (bodenwirksame Safener) angewendet werden, wie z.B. "Dichlormid" (PM, S. 363-364) (= N,N-Diallyl-2,2-dichloracetamid), "R-29148" (= 3-Dichloracetyl-2,2,5-trimethyl-1,3-oxazolidon von der Firma Stauffer), "Benoxacor" (PM, S. 102-103) (= 4-Dichloracetyl-3,4-dihydro-3-methyl-2H-1,4-benzoxazin, S-4), "PPG-1292" (= N-Allyl-N[(1,3-dioxolan-2-yl)-methylJdichloracetamid von der Firma PPG Industries), "DK-24" (= N-Allyl-N-[(allylaminocarbonyl)-methyl]-dichloracetamid von der Firma Sagro-Chem), "AD-67" oder "MON 4660" (= 3-Dichloracetyl-1-oxa-3-aza-spiro[4,5]decan von der Firma Nitrokemia bzw. Monsanto), "Dicyclonon" oder "BAS145138" oder "LAB145138" (= (= 3-Dichloracetyl-2,5,5-trimethyl-1,3-diazabiclyco[4.3.0]nonan von der Firma BASF) und "Furilazol" oder "MON 13900" (siehe PM, 637-638) (= (RS)-3-Dichloracetyl-5-(2-furyl)-2,2-dimethyloxazolidon)
10) Wirkstoffe vom Typ der Dichloracetonderivate, wie z.B. "MG 191" (CAS-Reg. Nr. 96420-72-3) (= 2-Dichlormethyl-2-methyl-1,3-dioxolan von der Firma Nitrokemia),
11) Wirkstoffe vom Typ der Oxyimino-Verbindungen, die als Saatbeizmittel bekannt sind, wie z.B. "Oxabetrinil" (PM, S. 902-903) (= (Z)-1,3-Dioxolan-2-ylmethoxyimino(phenyl)acetonitril), das als Saatbeiz-Safener gegen Schäden von Metolachlor bekannt ist, "Fluxofenim" (PM, S. 613-614) (= 1-(4-Chlorphenyl)-2,2,2-trifluor-1-ethanon-O-(1,3-dioxolan-2-ylmethyl)-oxim, das als Saatbeiz-Safener gegen Schäden von Metolachlor bekannt ist, und "Cyometrinil" oder "CGA-43089" (PM, S. 1304) (= (Z)-Cyanomethoxyimino (phenyl)acetonitril), das als Saatbeiz-Safener gegen Schäden von Metolachlor bekannt ist,
12) Wirkstoffe vom Typ der Thiazolcarbonsäureester, die als Saatbeizmittel bekannt sind, wie z.B. "Flurazol" (PM, S. 590-591) (= 2-Chlor-4-trifluormethyl-1,3-thiazol-5-carbonsäurebenzylester), das als Saatbeiz-Safener gegen Schäden von Alachlor und Metolachlor bekannt ist,
13) Wirkstoffe vom Typ der Napthalindicarbonsäurederivate, die als Saatbeizmittel bekannt sind, wie z.B. "Naphthalic anhydrid" (PM, S. 1342) (= 1,8-Naphthalindicarbonsäureanhydrid), das als Saatbeiz-Safener für Mais gegen Schäden von Thiocarbamatherbiziden bekannt ist,
14) Wirkstoffe vom Typ Chromanessigsäurederivate, wie z.B. "CL 304415" (CAS-Reg. Nr. 31541-57-8) (= 2-84-Carboxy-chroman-4-yl)-essigsäure von der Firma American Cyanamid),
15) Wirkstoffe, die neben einer herbiziden Wirkung gegen Schadpflanzen auch Safenerwirkung an Kulturpflanzen aufweisen, wie z.B. "Dimepiperate" oder "MY-93" (PM, S. 404-405) (= Piperidin-1-thiocarbonsäure-S-1-methyl-1-phenylethylester), "Daimuron" oder "SK 23" (PM, S. 330) (= 1-(1-Methyl-1-phenylethyl)-3-p-tolylharnstoff), "Cumyluron" = "JC-940" (= 3-(2-Chlorphenylmethyl)-1-(1-methyl-1-phenylethyl)-hamstoff, siehe JP-A-60087254), "Methoxyphenon" oder "NK 049" (= 3,3'-Dimethyl-4-methoxybenzophenon), "CSB" (= 1-Brom-4-(chlormethylsulfonyl)-benzol) (CAS-Reg. Nr. 54091-06-4 von Kumiai), Verbindungen von Typ der Acylsulfamoylbenzoesäureamide, z.B. der nachfolgenden Formel (VIII), die z.B. bekannt sind aus WO 99/16744.

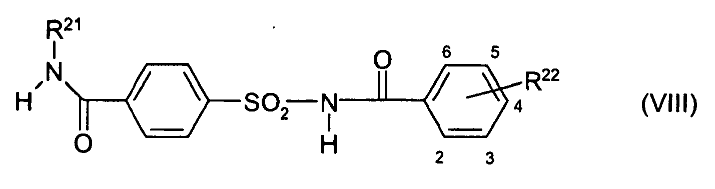

| Verbindung Nr. | R²¹ | R²² |
|---|---|---|
| S3-1 | Cyclo-Propyl | 2-OCH₃ |
| S3-2 | Cyclo-Propyl | 2-OCH₃, 5-Cl |
| S3-3 | Ethyl | 2-OCH₃ |
| S3-4 | iso-Propyl | 2-OCH₃, 5-Cl |
| S3-5 | iso-Propyl | 2-OCH₃ |

Bevorzugte Safener sind Mefenpyr, Fenchlorazol, Isoxadifen, Cloquintocet, und deren C₁-C₁₀-Alkylester, sowie die Safener (S3-1 = 4-Cyclopropylaminocarbonyl-N-(2-methoxybenzoyl)benzolsulfonamid) und Benoxacor (S-4), insbesondere Mefenpyr-diethyl (S1-1), Fenchlorazol-ethyl (S1-6), Isoxadifen-ethyl (S1-9), Cloquintocet-mexyl (S2-1), (S3-1) und Benoxacor (S-4).

Soweit in den erfindungsgemäßen Ölsuspensionskonzentraten Safener e) enthalten sind, beträgt deren Gewichtsanteil im allgemeinen 0,1 bis 60 Gew.-%, insbesondere 2 bis 40 Gew.-%.

Das Gewichtsverhältnis der Komponente a) zu der Komponente e) kann in einem weiten Bereich variieren, und liegt im allgemeinen zwischen 1:100 und 100:1, bevorzugt zwischen 1:10 und 10:1.

Als optionale agrochemische Wirkstoffe h) können beispielsweise von den Komponenten a) und e) verschiedene agrochemische Wirkstoffe wie Herbizide, Fungizide, Insektizide, Pflanzenwachstumsregulatoren und dergleichen enthalten sein. Die agrochemischen Wirkstoffe h) können in dem organischen Lösungsmittel in suspendierter und/oder gelöster Form vorliegen.

Als optional enthaltene von den Komponenten (a) und (e) verschiedene agrochemische Wirkstoffe (h) kommen für die erfindungsgemäßen Ölsuspensionskonzentrate insbesondere Herbizide in Frage, beispielsweise die nachfolgend genannten bekannten Herbizide, wie sie in z.B. Weed Research 26, 441-445 (1986), oder "The Pesticide Manual", 13th edition, The British Crop Protection Council, 2003, und dort zitierter Literatur beschrieben sind, z.B. in Mischungsformulierungen oder als Tank-Mischpartner. Die Verbindungen sind entweder mit dem "common name" nach der International Organization for Standardization (ISO) oder mit dem chemischen Namen, ggf. zusammen mit einer üblichen Codenummer bezeichnet und umfassen stets sämtliche Anwendungsformen wie Säuren, Salze, Ester und Isomere wie Stereoisomere und optische Isomere: 2,4-D, Acetochlor, Acifluorfen, Acifluorfen-sodium, Aclonifen, Alachlor, Alloxydim, Alloxydim-sodium, Ametryn, Amicarbazone, Amidosulfuron, Aminopyralid, Amitrole, Anilofos, Asulam, Atrazine, Azafenidin, Azimsulfuron, Beflubutamid, Benazolin, Benazolin-ethyl, Benfuresate, Bensulfuron-methyl, Bentazone, Benzfendizone, Benzobicyclon, Benzofenap, Bifenox, Bilanafos, Bispyribac-sodium, Bromacil, Bromobutide, Bromofenoxim, Bromoxynil, Butachlor, Butafenacil, Butenachlor, Butralin, Butroxydim, Butylate, Cafenstrole, Carbetamide, Carfentrazone-ethyl, Chlomethoxyfen, Chloridazon, Chlorimuron-ethyl, Chlornitrofen, Chlorotoluron, Chlorsulfuron, Cinidon-ethyl, Cinmethylin, Cinosulfuron, Clefoxydim, Clethodim, Clodinafop-propargyl, Clomazone, Clomeprop, Clopyralid, Cloransulamethyl, Cumyluron, Cyanazine, Cyclosulfamuron, Cycloxydim, Cyhalofop-butyl, Desmedipham, Dicamba, Dichlobenil, Dichlorprop, Dichlorprop-P, Diclofop-methyl, Diclosulam, Difenzoquat, Diflufenican, Diflufenzopyr, Dikegulac-sodium, Dimefuron, Dimepiperate, Dimethachlor, Dimethametryn, Dimethenamid, Diquat-dibromide, Dithiopyr, Diuron, Dymron, EPTC, Esprocarb, Ethalfluralin, Ethametsulfuron-methyl, Ethofumesate, Ethoxyfen, Ethoxysulfuron, Etobenzanid, Fenoxaprop-ethyl, Fenoxaprop-P-ethyl, Fentrazamide, Flamprop-M-isopropyl, Flamprop-M-methyl, Flazasulfuron, Florasulam, Fluazifop, Fluazifop-butyl, Fluazolate, Flucarbazonesodium, Flucetosulfuron, Fluchloralin, Flufenacet, Flufenpyr, Flumetsulam, Flumiclorac-pentyl, Flumioxazin, Fluometuron, Fluorochloridone, Fluoroglycofen-ethyl, Flupoxam, Flupyrsulfuron-methyl-sodium, Fluridone, Fluroxypyr, Fluroxypyrbutoxypropyl, Fluroxypyr-meptyl, Flurprimidol, Flurtamone, Fluthiacet-methyl, Fomesafen, Foramsulfuron, Glufosinate, Glufosinate-ammonium, Glyphosate, Halosulfuron-methyl, Haloxyfop, Haloxyfop-ethoxyethyl, Haloxyfop-methyl, Haloxyfop-P-methyl, Hexazinone, Imazamethabenz-methyl, Imazamox, Imazapic, Imazapyr, Imazaquin, Imazethapyr, Imazosulfuron, Indanofan, Iodosulfuron-methylnatrium, Ioxynil, Isoproturon, Isouron, Isoxaben, Isoxachlortole, Isoxaflutole, Ketospiradox, Lactofen, Lenacil, Linuron, MCPA, Mecoprop, Mecoprop-P, Mefenacet, Mesosulfuron-methyl, Mesotrione, Metamifop, Metamitron, Metazachlor, Methabenzthiazuron, Methyldymron, Metobromuron, Metolachlor, Metosulam, Metoxuron, Metribuzin, Metsulfuron-methyl, Molinate, Monolinuron, Naproanilide, Napropamide, Neburon, Nicosulfuron, Norflurazon, Orbencarb, Oryzalin, Oxadiargyl, Oxadiazon, Oxasulfuron, Oxaziclomefone, Oxyfluorfen, Paraquat, Pelargonic acid, Pendimethalin, Pendralin, Penoxsulam, Pentoxazone, Pethoxamid, Phenmedipham, Picloram, Picolinafen, Pinoxaden, Piperophos, Pretilachlor, Primisulfuron-methyl, Profluazol, Profoxydim, Prometryn, Propachlor, Propanil, Propaquizafop, Propisochlor, Propoxycarbazone-sodium, Propyzamide, Prosulfocarb, Prosulfuron, Pyraclonil, Pyraflufen-ethyl, Pyrazolate, Pyrazosulfuron-ethyl, Pyrazoxyfen, Pyribenzoxim, Pyributicarb, Pyridafol, Pyridate, Pyriftalid, Pyriminobac-methyl, Pyrithiobac-sodium, Quinclorac, Quinmerac, Quinoclamine, Quizalofop-ethyl, Quizalofop-P-ethyl, Quizalofop-P-tefuryl, Rimsulfuron, Sethoxydim, Simazine, Simetryn, S-Metolachlor, Sulcotrione, Sulfentrazone, Sulfometuron-methyl, Sulfosate, Sulfosulfuron, Tebuthiuron, Tepraloxydim, Terbuthylazine, Terbutryn, Thenylchlor, Thiazopyr, Thifensulfuron-methyl, Thiobencarb, Tiocarbazil, Tralkoxydim, Triallate, Triasulfuron, Triaziflam, Tribenuron-methyl, Triclopyr, Tridiphane, Trifloxysulfuron, Trifluralin, Triflusulfuron-methyl, Tritosulfuron, 4-(4,5-Di-hydro-4-methyl-5-oxo-3-trifluormethyl-1H-1,2,4-triazo)-1-yl)-2-(ethylsulfonylamino)-5-fluor-benzolcarbothioamid (HWH4991, vgl. WO-A-95/30661), 2-Chlor-N-[1-(2,6-dichlor-4-difluormethyl-phenyl)-4-nitro-1 H-pyrazol-5-yl]-propancarbonsäureamid (SLA5599, vgl. EP-A-303153), und die Verbindungen 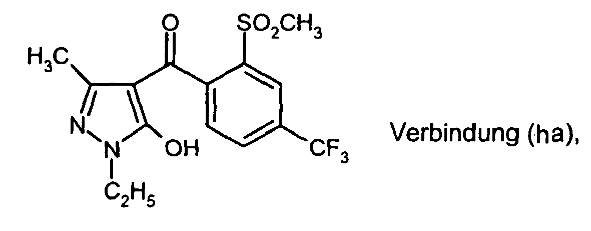 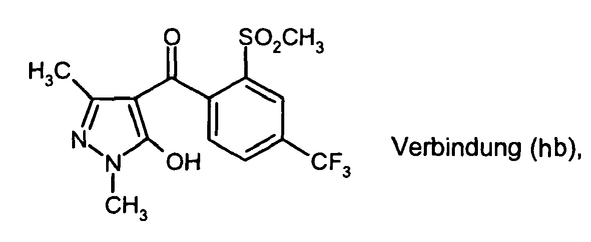 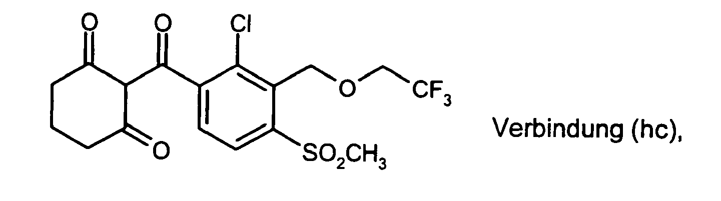 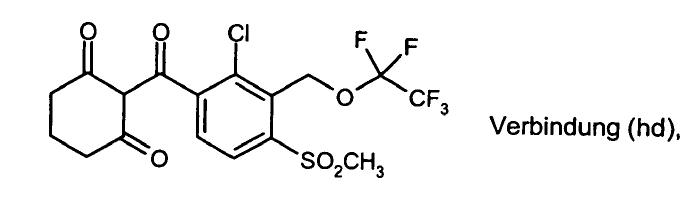 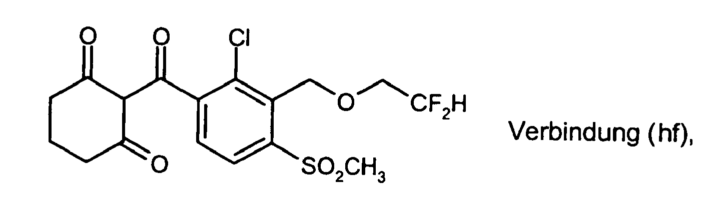 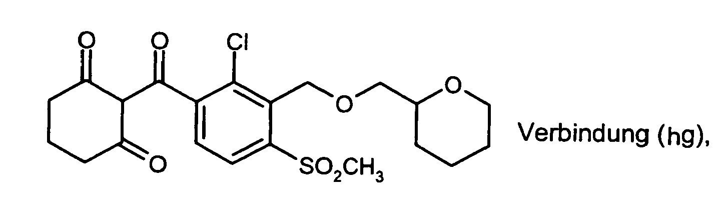 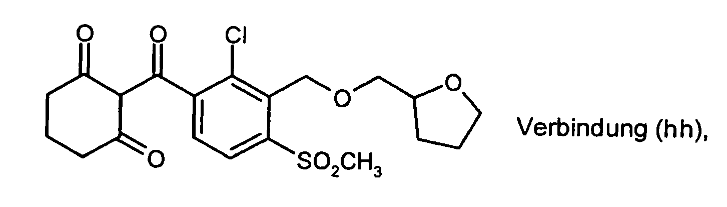 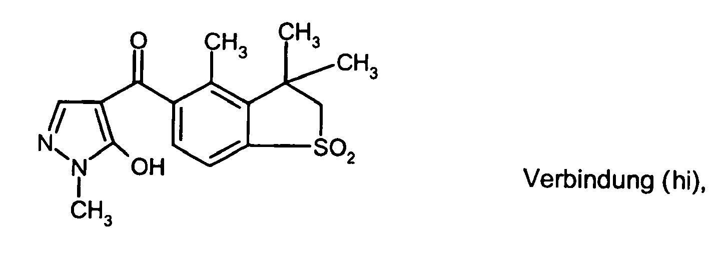 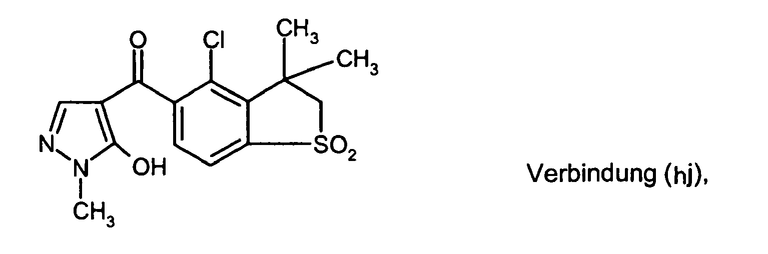 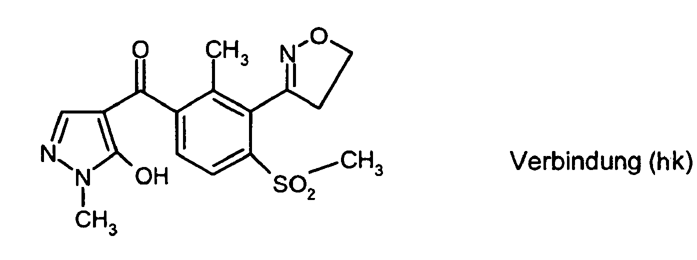 und

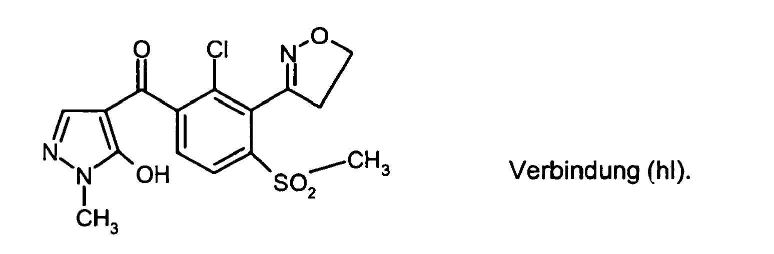

Die Verbindungen (ha) und (hb) sind aus der WO 01/74785, die Wirkstoffe (hc) bis (hh) aus der WO 00/21924 und die anderen Wirkstoffe (hi) bis (hl) aus der WO 96/26206, WO 96/25412 und der US 20020016262 bekannt.

Bevorzugte Komponenten h) sind Herbizide der nachfolgenden Untergruppen (h1) bis (h4) (die Bezeichnung der Herbizide erfolgt weitgehend mit dem "common name", soweit möglich nach der Referenzstelle "The Pesticide Manual", British Crop Protection Council 1997, 11th Ed., abgekürzt "PM". oder 2003, 13th Ed., abgekürzt "PM13"):
- (h1): gegen monokotyle und dikotyle Schadpflanzen wirksame Herbizide, beispielsweise
- (h1.1): Flufenacet (BAY FOE 5043) (PM, S. 82-83), 4'-Fluor-N-isopropyl-2-(5-trifluormethyl-1,3,4-thiadiazol-2-yloxy)-acetanilid,
- (h1.2): Metolachlor (PM, S. 833-834), 2-Chlor-N-(2-ethyl-6-methylphenyl)-N-(2-methoxy-1-methylethyl)-acetamid,
- (h1.3): Acetochlor (PM, S. 10-12), 2-Chlor-N-(ethoxymethyl)-N-(2-ethyl-6-methylphenyl)-acetamid,
- (h1.4): Dimethenamid (PM, S. 409-410), 2-Chlor-N-(2,4-dimethyl-3-thienyl)-N-(2-methoxy-1-methylethyl)-acetamid,
- (h1.5): Pethoxamid (AG Chem, New Compound Review (publ. Agranova), Vol. 17,1999, S. 94, d.h. 2-chloro-N-(2-ethoxyethyl)-N-(2-methyl-1-phenyl-1-propenyl)acetamid,
- (h1.6): Atrazin (PM, S. 55-57), N-Ethyl-N'-isopropyl-6-chlor-2,4-diamino-1,3,5-triazin,
- (h1.7): Simazin (PM, S. 1106-1108), 6-Chlor-N,N-diethyl-2,4-diamino-1,3,5-triazin,
- (h1.8): Cyanazin (PM, S. 280-283), 2-(4-Chlor-6-ethylamino-1,3,5-triazin-2-ylamino)-2-methyl-propionsäurenitril,
- (h1.9): Terbuthylazin (PM, S. 1168-1170), N-Ethyl-N'-tert.-butyl-6-chlor-2,4-diamino-1,3,5-triazin,
- (h1.10): Metribuzin (PM, S. 840-841), 4-Amino-6-tert.-butyl-3-methylthio-1,2,4-triazin-5(4H)-on,
- (h1.11): Terbutryn (PM, S. 1170-1172), N-(1,1-dimethylethyl)-N'-ethyl-6-(methylthio)-1,3,5-triazin-2,4-diamin,
- (h1.12): Nicosulfuron (PM, S. 877-879), 2-(4,6-Dimethoxypyrimidin-2-yl)-3-(3-dimethylcarbamoyl-2-pyridylsulfonyl)-harnstoff und dessen Salze,
- (h1.13): Rimsulfuron (PM, S. 1095-1097), 1-(4,6-Dimethoxypyrimidin-2-yl)-3-(3-ethylsulfonyl-2-pyridylsulfonyl)-harnstoff und dessen Salze,
- (h1.14): Primisulfuron und Ester wie der Methylester (PM, S. 997-999), 2-[4,6-Bis(difluormethoxy)-pyrimidin-2-ylcarbamoylsulfamoyl]-benzoesäure bzw. -methylester, und deren Salze,
- (h1.15): Halosulfuron (PM, S. 657-659), 3-Chlor-5-(4,6-dimethoxy-pyrimidin-2-ylcarbamoylsulfamoyl)-1-methylpyrazol-4-carbonsäure und deren Ester und Salze, vorzugsweise der Methylester,
- (h1.16): Iodosulfuron (PM13, S. 573-574) und vorzugsweise Ester wie der Methylester und deren Salze (vgl. WO 96/41537 auf die hiermit ausdrücklich Bezug genommen wird), 4-Iod-2-(4-Methoxy-6-methyl-1,3,5-triazin-2-ylcarbamoylsulfamoyl)-benzoesäure bzw. -methylester und deren Salze wie das Natriumsalz, bekannt aus WO-A-92/13845 auf die hiermit ausdrücklich Bezug genommen wird,
- (h1.17): Foramsulfuron und dessen Salze (PM13, S. 494-495), 1-(4,6-dimethoxypyrimidin-2-yl)-3-[2-(dimethylcarbamoyl)-5-formamidophenylsulfonyl]harnstoff,
- (h1.18): Pendimethalin (PM, S. 937-939), N-(1-ethylpropyl)-2,6-dinitro-3,4-xylidin,
- (1.19): Sulcotrione (PM, S. 1124-1125), 2-(2-Chlor-4-mesylbenzoyl)-cyclohexan-1,3-dion,
- (h1.20): Dicamba (PM, S. 356-357), 3,6-Dichlor-o-anissäure und deren Salze,
- (h1.21): Mesotrione, 2-(4-Mesyl-2-nitrobenzoyl)cyclohexan-1,3-dion (ZA 1296, vgl. Weed Science Society of America (WSSA) in WSSA Abstracts 1999, Vol. 39, Seite 65-66, Ziffern 130-132),
- (h1.22): Linuron (PM, S. 751-753), 3-(3,4-dichlorophenyl)-1-methoxy-1-methylharnstoff
- (h1.23): Isoxachlortole (AG Chem, New Compound Review, publ. Agranova, Vol. 16, 1998, S. 39), d.h. 4-chloro-2-(methylsulfonyl)phenyl-5-cyclopropyl-4-isoxazolylketon
- (h1.24): Isoxaflutole (PM, S. 737-739), (5-Cyclopropyl-4-isoxazolyl)[2-(methylsulfonyl)-4-(trifluormethyl)phenyl]methanon,
- (h1.25): Metosulam (PM, S. 836-838), 2',6'-dichloro-5,7-dimethoxy-3'-methyl[1,2,4]triazolo[1,5-a]pyrimidin-2-sulfonamid
- (h1.26): Flumetsulam (PM, S. 573-574), 2',6'-difluoro-5-methyl[1,2,4]triazolo[1,5-a]pyrimidin-2-sulfonamid
- (h1.27): Cloransulam und Ester wie der Methylester (PM, S. 265), 3-chloro-2-(5-ethoxy-7-fluoro[1,2,4]triazolo[1,5-c]pyrimidin-2-ylsulfonamido)benzoesäure und vorzugsweise der Methylester,
- (h1.28): Florasulam (Zeitschrift für Pflanzenkrankheiten und Pflanzenschutz, Verlag Eugen Ulmer, Stuttgart, Sonderheft XVI, 1998, S. 527-534), N-(2,6-difluorophenyl)-8-fluoro-5-methoxy(1,2,4)triazolo[1,5-c]pyrimidin-2-sulfonamid
- (h1.29): Molinate (PM, S. 847-849), N-(ethylthio-carbonyl)-azepan,
- (h1.30): Thiobencarb (PM, S. 1192-1193), N,N-Diethyl-carbaminsäure-4-chlorbenzylthioester
- (h1.31): Quinchlorac (PM, S. 1078-1080), 3,7-Dichlorchinolin-8-carbonsäure und deren Salze
- (h1.32): Propanil (PM, S. 1017-1019), N-(3,4-dichlorophenyl)-propanamid
- (h1.33): Pyribenzoxim, Benzophenone O-[2,6-bis-[(4,6-dimethoxy-2-pyrimidnyl)oxy]benzoyl]oxim, Tagungsband: The 1997 Brighton Crop Protection Conference, Weeds (publ. British Crop Protection Council) S. 39-40
- (h1.34): Butachlor (PM, S. 159-160), N-(Butoxymethyl)-2-chlor-N-(2,6-diethylphenyl)-acetamid
- (h1.35): Pretilachlor (PM, S. 995-996), N-(2-Propoxyethyl)-2-chlor-N-(2,6-diethylphenyl)acetamid
- (h1.36): Clomazone (PM, S. 256-257), 2-[(2-Chlorphenyl)-4,4-dimethyl-3-isoxazolidinon;
- (h1.37): Oxadiargyl (PM, S. 904-905), 5-tert-Butyl-3-[2,4-dichloro-5-(prop-2-ynyloxy)phenyl]-1,3,4-oxadiazol-2(3H)-on,
- (h1.38): Oxaziclomefone, 3-[1-(3,5-dichlorophenyl)1-methylethyl)-1-2,3-dihydro-6-methyl-5-phenyl-4H-1,3-oxazin-4-on Tagungsband: The 1997 Brighton Crop Protection Conference, Weeds (publ. British Crop Protection Council) S. 73-74
- (h1.39): Anilofos (PM, S. 47-48), S-4-Chlor-N-isopropylcarbaniloylmethyl-O,O-dimethyl-phosphorodithioat
- (h1.40): Cafenstrole (PM, S. 173-174), 1-Diethylcarbamoyl-3-(2,4,6-trimethylphenylsulfonyl)-1,2,4-triazol
- (h1.41): Thiazopyr (PM, S. 1185-1187), methyl 2-difluoromethyl-5-(4,5-dihydro-1,3-thiazol-2-yl)-4-isobutyl-6-trifluoromethylnicotinat)
- (h1.42): Triclopyr (PM, S. 1237-1239), [(3,5,6-trichloro-2-pyridinyl)oxy]essigsäure, bevorzugt als Triclopyr, Triclopyr-butotyl, Triclopyr-triethylammonium,
- (h1.43): Oxadiazone (PM, S. 905-907), 5-tert-butyl-3-(2,4-dichloro-5-isopropoxyphenyl)-1,3,4-oxadiazol-2(3H)-on,
- (h1.44): Esprocarb (PM, S. 472-473), S-Benzyl-1,2-dimethylpropyl(ethyl)-thiocarbamat
- (h1.45): Pyributicarb (PM, S. 1060-1061), O-3-tert-Butylphenyl-6-methoxy-2-pyridyl-(methyl)-thiocarbamat (TSH-888)
- (h1.46): Azimsulfuron (PM, S. 63-65), 1-(4,6-dimethoxypyrimidin-2-yl)-3-[1-methyl-4-(2-methyl-2H-tetrazol-5-yl)pyrazol-5-ylsulfonylharnstoff
- (h1.47): Azole, wie sie aus der EP-A-0663913 bekannt sind, auf die hiermit ausdrücklich Bezug genommen wird, z.B. 1-(3-Chlor-4,5,6,7-tetrahydropyrazolo-[1,5-a]-pyridin-2-yl)-5-methyl- propargylamino)-4-pyrazolylcarbonsäurenitril (im weiteren "EP 913"),
- (h1.48): Thenylchlor (PM, S. 1182-1183), 2-chlor-N-(3-methoxy-2-thenyl)-2',6'-dimethylacetanilide,
- (h1.49): Pentoxazone (PM, S. 942-943), 3-(4-Chloro-5-cyclopentyloxy-2-fluorphenyl)-5-isopropyliden-1,3-oxazolidin-2,4-dion,
- (h1.50): Pyriminobac und dessen Ester wie der Methylester (PM, S. 1071-1072), 2-(4,6-Dimethoxy-2-pyrimidinyloxy)-6-(1-methoxyiminoethyl)-benzoesäuremethylester, auch als Säure oder Natriumsalz,
- (h1.51): Mesosulfuron und dessen Salze und Ester (PM, S. 630), Methyl 2-[(4,6-dimethoxypyrimidin-2-ylcarbamoyl)sulfamoyl]a-(methane-sulfonamido)-p-toluat,
- (h1.52): Isoproturon (PM, S. 732-734), 3-(4-isopropylphenyl)-1,1-dimethylharnstoff
- (h1.53): Chlortuloron (PM, S. 229-231), 3-(3-chloro-p-tolyl)-1,1-dimethylharnstoff
- (h1.54): Prosulfocarb (PM, S. 1039-1041), S-benzyl dipropylthiocarbamat
- (h1.55): Flucarbazone und dessen Salze (PM13, S. 447-448), 4,5-dihydro-3-methoxy-4-methyl-5-oxo-N-(2-trifluoromethoxyphenylsulfonyl)-1 H-1,2,4-triazole-1-carboxamid Natrium,
- (h1.56): Propoxycarbazone und dessen Salze (PM, S. 831-832), Methyl 2-[[[(4,5-dihydro-4-methyl-5-oxo-3-propoxy-1H-1,2,4-triazol-1-yl)carbonyl]amino]sulfonyl]benzoat, Natriumsalz
- (h1.57): Flupyrsulfuron und dessen Ester wie der Methylester und deren Salze (PM, S. 586-588), methyl 2-(4,6-dimethoxypyrimidin-2-ylcarbamoylsulfamoyl)-6-trifluoromethylnicotinat natrium)
- (h1.58): Sulfosulfuron und dessen Salze (PM, S. 1130-1131), 1-(4,6-dimethoxypyrimidin-2-yl)-3-(2-ethylsulfonylimidazo[1,2-a]pyridin-3-yl)sulfonylharnstoff
- (h1.59): Trifluralin (PM13, S. 1012-1014), α,α,α-trifluoro-2,6-dinitro-N,N-dipropyl-p-toluidin,
- (h1.60): Ethalfluralin (PM13, S. 375-376), N-ethyl-α,α,α-trifluoro-N-(2-methylallyl)-2,6-dinitro-p-toluidin,
- (h1.61): Norflurazon (PM13, S. 711-712), 4-chloro-5-methylamino-2-(α,α,α-trifluoro-m-tolyl)pyridazin-3(2H)-on,
- (h1.62): Vernolate (PM13, S. 1099), S-propyl dipropylthiocarbamat,
- (h1.63): Chlorotoluron (PM13, S. 170), 3-(3-chloro-p-tolyl)-1,1-dimethylharnstoff,
- (h1.64): Imazethapyr und dessen Salze und Ester (PM13, S. 558-560), (RS)-5-ethyl-2-(4-isopropyl-4-methyl-5-oxo-2-imidazolin-2-yl)nicotinsäure,
- (h1.65): Imazamox (PM13, S.552-553), (RS)-2-(4-isopropyl-4-methyl-5-oxo-2-imidazolin-2-yl)-5-methoxymethylnicotinsäure,
- (h1.66): Imazaquin und dessen Salze und Ester (PM13, S. 557-558), (RS)-2-(4-isopropyl-4-methyl-5-oxo-2-imidazolin-2-yl)quinoline-3-carboxylsäure,

- (h2): überwiegend gegen dikotyle Schadpflanzen wirksame Herbizide, beispielsweise
- (h2.1): MCPA (PM, S. 767-769), (4-Chlor-2-methyl-phenoxy)-essigsäure und deren Salze und Ester,
- (h2.2): 2,4-D (PM, S. 323-327), 2,4-Dichlorphenoxyessigsäure und deren Salze und Ester,
- (h2.3): Bromoxynil (PM, S. 149-151), 3,5-Dibrom-4-hydroxy-benzonitril,
- (h2.4): Bentazone (PM, S. 1064-1066), 3-Isopropyl-2,2-dioxo-1H-2,1,3-benzothiadiazin-4(3H)-on,
- (h2.5): Fluthiacet (PM, S. 606-608), [2-Chlor-4-fluor-5-[5,6,7,8-tetrahydro-3-oxo-1H,3H-1,3,4-thiadiazolo[3,4-a]pyridazin-1-ylidenamino)phenylthio]-essigsäure und vorzugsweise der Methylester,
- (h2.6): Pyridate (PM, S. 1064-1066), Thiokohlensäure-O-(6-Chlor-3-phenylpyridazin-4-yl)-S-(octyl)-diester,
- (h2.7): Diflufenzopyr (BAS 654 00 H, PM S. 81-82), 2-{1-[4-(3,5-difluorophenyl)semicarbazono]ethyl}nicotinsäure
- (h2.8): Carfentrazone (PM, S. 191-193), ethyl (RS)-2-chloro-3-[2-chloro-5-(4-difluoromethyl-4,5-dihydro-3-methyl-5-oxo-1H-1,2,4-triazol-1-yl)-4-fluorophenyl]propionat angewendet u.a. als Carfentrazone-ethyl (wie angegeben) oder auch als Säure
- (h2.9): Clopyralid (PM, S. 260-263), 3,6-dichloropyridin-2-carbonsäure
- (h2.10): Thifensulfuron und dessen Ester, vorzugsweise der Methylester (PM, S. 1188-1190), 3-[[[[(4-Methoxy-6-methyl-1,3,5-triazin-2-yl)-amino]-carbonyl]-amino]sulfonyl]-2-thiophencarbonsäure bzw. -methylester und dessen Salze,
- (h2.11): Prosulfuron und dessen Salze (PM, S. 1041-1043), 1-(4-Methoxy-6-methyl-1,3,5-triazin-2-yl)-3-[2-(3,3,3-trifluorpropyl)-phenylsulfonyl]-harnstoff und dessen Salze,
- (h2.12): Tritosulfuron und dessen Salze (PM13, S.1022; AG Chem, New Compound Review (publ. Agranova), Vol. 17, 1999, S. 24), N-[[[4'-methoxy-6-(trifluoromethyl)-1,3,5-triazin-2-yl]amino]carbonyl]-2-trifluoromethylbenzenesulfonamid)
- (h2.13): Triasulfuron und dessen Salze (PM, S. 1222-1224), 1-[2-(2-chloroethoxy)phenylsulfonyl]-3-(4-methoxy-6-methyl-1,3,5-triazin-2-yl)harnstoff
- (h2.14): 2,4-D (PM, S.323-327), (2,4-Dichlorphenoxy)essigsäure,häufig eingesetzte Formen: 2,4-D-butotyl, 2,4-D-butyl, 2,4-D-dimethylammonium, 2,4-D-diolamin, 2,4-D-iso-octyl, 2,4-D-isopropyl, 2,4-D-trolamin
- (h2.15): MCPA (PM, S. 770-771), (4-Chlor-2-methylphenoxy)essigsäure, vorwiegend eingesetzte Formen sind u.a. MCPA-butotyl, MCPA-dimethylammonium, MCPA-isoctyl, MCPA-Kalium, MCPA-Natrium
- (h2.16): Bensulfuron und dessen Ester, vorzugsweise der Methylester und deren Salze, (PM, S. 104-105), α-(4,6-Dimethoxypyrimidin-2-yl-carbamoyl-sulfamoyl)-O-toluolsäure-methylester
- (h2.17): Metsulfuron und dessen Ester, vorzugsweise der Methylester und deren Salze (PM, S. 842-844), methyl 2-[[[[(4-methoxy-6-methyl-1,3,5-triazin-2-yl)amino]carbonyl] amino]sulfonyl]benzoat
- (h2.18): Acifluorfen (PM, S. 12-14), 5-(2-Chlor-α,α,α,-trifluor-p-tolyloxy)-2-nitrobenzoesäure, auch verwendet als Acifluorfen-Natrium
- (h2.19): Bispyribac (KIH 2023), bevorzugt ist die Form als Natriumsalz (PM, S. 129-131), Natrium 2,6-bis[(4,6-dimethoxypyrimidin-2-yl)oxy]benzoat,
- (h2.20): Ethoxysulfuron und dessen Ester und Salze (PM,S. 488-490), 1-(4,6-dimethoxypyrimidin-2-yl)-3-(2-ethoxyphenoxy-sulfonyl)harnstoff
- (h12.21): Cinosulfuron und dessen Ester und Salze (PM, S. 248-250), 1-(4,6-Dimethoxy-1,3,5-triazin-2-yl)-3-[2-(2-methoxyethoxy)-phenylsulfonyl]-harnstoff
- (h2.22): Pyrazosulfuron und dessen Ester, vorzugsweise der Ethylester, und deren Salze (PM, S. 1052-1054), 5-(4,6-Dimethoxypyrimidin-2-yl-carbamoylsulfamoyl)-1-methylpyrazol-4-carbonsäuremethylester
- (h2.23): Imazosulfuron und dessen Ester und Salze (PM, S. 703-704), 1-(2-chloroimidazo[1,2-a]pyridin-3-ylsulfonyl)-3-(4,6-dimethoxypyrimidin-2-yl]harnstoff
- (h2.24): Cyclosulfamuron und dessen Ester und Salze (PM, S. 288-289), N-[[[2-(cyclopropylcarbonyl)phenyl]amino]sulfonyl]-N1-(4,6-dimethoxypyrimidin-2-yl)harnstoff
- (h2.25): Chlorsulfuron und dessen Ester und Salze (PM, S. 239-240), 1-(2-chlorophenylsulfonyl)-3-(4-methoxy-6-methyl-1,3,5-triazin-2-yl)harnstoff
- (h2.26): Bromobutide (PM, S. 144-145), 2-Brom-3,3-dimethyl-N-(1-methyl-1-phenylethyl)-butyramid
- (h2.27): Bentazon (PM, S. 109-111), 3-Isopropyl-1H-2,1,3-benzothiadiazin-4(3H)-on-2,2-dioxid
- (h.2.28): Chlorimuron und dessen Ester, vorzugsweise der Ethylester, und deren Salze (PM, S. 217-218), ethyl 2-(4-chloro-6-methoxypyrimidin-2-yl-carbonylsulfamoyl)benzoat
- (h2.29): Diflufenican (PM, S. 397-399), 2',4'-difluoro-2-(α,α,α-trifluoro-m-tolyloxy)nicotinanilid
- (h2.30): Flurtamone (PM, S. 602-603), (RS)-5-methylamino-2-phenyl-4-(α,α,α-trifluoro-m-tolyl)furan-3(2H)on
- (h2.31): Tribenuron (PM, S. 1230-1232), methyl 2-[[[[4-methoxy-6-methyl-1,3,5-triazin-2-yl)-methylamino]carbonyl]amino]sulfonyl]benzoat
- (h.2.32): Amidosulfuron und dessen Salze (PM, S. 37-38), 1-(4,6-dimethoxypyrimidin-2-yl)-3-mesyl(methyl)sulfamoylharnstoff
- (h2.33): Mecoprop/Mecoprop-p und deren Ester (PM, S. 776-779), (RS)-2-(4-chloro-o-tolyloxy)propionsäure
- (h2.34): Dichlorprop/Dichlorprop-P und deren Ester (PM, S. 368-372), (RS)-2-(2,4-dichlorophenoxy)propionsäure
- (h2.35): Fluroxypyr (PM, S. 597-600), 4-amino-3,5-dichloro-6-fluoro-2-pyridyloxyacetic acid
- (h2.36): Picloram (PM, S. 977-979), 4-amino-3,5,6-trichloropyridine-2-carbonsäure
- (h2.37): Ioxynil (PM, S. 718-721), 4-hydroxy-3,5-di-iodobenzonitril
- (h2.38): Bifenox (PM, S. 116-117), methyl-5-(2,4-dichlorophenoxy)-2-nitrobenzoat
- (h2.39): Pyraflufen-ethyl (PM, S. 1048-1049), ethyl 2-chloro-5-(4-chloro-5-difluoromethoxy-1-methylpyrazol-3-yl)-4-fluorophenoxyacetat
- (h.2.40): Fluoroglycofen-ethyl (PM, S. 580-582), O-[5-(2-chloro-α,α,α-trifluoro-p-tolyloxy)-2-nitrobenzoyl]glycolsäure
- (h2.41): Cinidon-ethyl (BAS 615005) (AG Chem, New Compound Review, publ. Agranova, Vol. 17, 1999, S. 26)
- (h2.42): Picolinafen (PM13, S. 785-786) AG Chem, New Compound Review, (publ. Agranova), Vol. 17, 1999, S. 35), N-4-fluorophenyl-6-(3-trifluoromethylphenoxy)pyridin-2-carboxamid,
- (h2.43): Sulfentrazone (PM13, S. 910-911), 2',4'-dichloro-5'-(4-difluoromethyl-4,5-dihydro-3-methyl-5-oxo-1H-1,2,4-triazol-1-yl)methanesulfonanilid,
- (h2.44): Oxyfluorfen (PM13, S. 738-739), 2-chloro-α,α,α-trifluoro-p-tolyl 3-ethoxy-4-nitrophenyl ether,
- (h2.45): Lactofen (PM13, S. 596-597), ethyl O-[5-(2-chloro-α,α,α-trifluoro-p-tolyloxy)-2-nitrobenzoyl]-DL-lactat,
- (h2.46): Fomesafen (PM13, S. 492-493), 5-(2-chloro-α,α,α-trifluoro-p-tolyloxy)-N-methylsulfonyl-2-nitrobenzamid,
- (h2.47): Flumiclorac (PM13, S. 460-461), pentyl [2-chloro-5-(cyclohex-1-ene-1,2-dicarboximido)-4-fluorophenoxy]acetat,
- (h2.48): 2,4-DB (PM13, S. 264-266), 4-(2,4-dichlorophenoxy)buttersäure,
- (h2.49): Flumioxazin (PM13, S. 461-462), N-(7-fuoro-3,4-dihydro-3-oxo-4-prop-2-ynyl-2H-1,4-benzoxazin-6-yl)cyclohex-1-ene-1,2-dicarboxamid,
- (h2.50): Benazolin (PM13, S. 62-64), 4-chloro-2-oxobenzothiazolin-3-ylessigsäure; 4-chloro-2,3-dihydro-2-oxobenzothiazol-3-ylessigsäure,

- (h3): überwiegend gegen monokotyle Schadpflanzen wirksame Herbizide, beispielsweise
- (h3.1): Quizalofop/Quizalofop-P und deren Ester wie der Ethyl- oder Tefurylester (PM, S. 1087-1092), (RS)-2-[4-(6-chlorochinoxalin-2-yloxy)phenoxy]propionsäure,
- (h3.2): Fenoxaprop/Fenoxaprop-P oder deren Ester wie der Ethylester (PM, S. 519-520), 2-[4-(6-Chlor-benzoxazol-2-yloxy)-phenoxy]-propionsäureethylester,
- (h3.3): Fluazifop/Fluazifop-P und deren Ester wie der Butylester (PM, S. 553-557), butyl (RS)-2-[4-(5-trifluoromethyl-2-pyridiyloxy)phenoxy]propionat,
- (h3.4): Haloxyfop /Haloxyfop-P und deren Ester wie der Methylester (PM, S. 659-663), (±)-2-[4-[[3-Chlor-5-(trifluoromethyl)-2-pyridinyl]oxy]phenoxy]propionsäure, umfassend u.a. die Anwendungsform als Haloxyfop-etotyl, haloxyfop-methyl, haloxyfop-methyl [(R)-Isomer],
- (h3.5): Propaquizafop (PM, S. 1021-1022), 2-isopropylidenamino-oxyethyl (R)-2-[4-(6-chlorochinoxalin-2-yloxy)phenoxy]propionat,
- (h3.6): Clodinafop und deren Ester wie der Propargylester (PM, S. 251-253), (R)-2-[4-(5-chloro-3-fluoro-2-pyridyloxy)-phenoxy]propionsäure,
- (h3.7): Cyhalofop und deren Ester wie der Butylester (PM, S. 297-298), Butyl(R)-2-[4-(4-cyano-2-fluorophenoxy)phenoxy]propionat,
- (h3.8): Diclofop/Diclofop-P und deren Ester wie der Methylester (PM, S. 374-377), (RS)-2-(2,4-dichlorophenoxy)phenoxy]propionsäure,
- (h3.9): Sethoxydim (PM, S. 1101-1103), (±)-(EZ)-(1-ethoxyiminobutyl)-5-[2-ethylthio)propyl]-3-hydroxycyclohex-2-enon,
- (h3.10): Cycloxydim (PM, S. 290-291), (±)-2-[1-(ethoxyimino)butyl]-3-hydroxy-5-thian-3-ylcyclohex-2-enon,
- (h3.11): Clethodim (PM, S. 250-251), (±)-2-[(E)-1-[(E)-3-chloroallyloxyimino]propyl]-5-[2-(ethylthio)propyl]-3-hydrocyclohex-2-enon,
- (h3.12): Profoxydim, 2-[1-(2-(4-chlorophenoxy)propoxyimino)butyl]-3-oxo-5-thian-3-ylcyclohex-1-enol (AG Chem, New Compound Review (publ. Agranova), Vol. 17, 1999, S. 26 sowie PM, 13. Auflage S. 808-809),
- (h3.13): Alachlor (PM, S. 23-24), 2-Chlor-N-(2,6-diethylphenyl)-N-(methoxymethyl)-acetamid,
- (h3.14): Mefenacet (PM, S. 779-781), 2-(1,3-Benzthiazol-3-yloxy)-N-methylacetanilid,
- (h3.15): Fentrazamid, 4-(2-Chlorphenyl)-5-oxo-4,5-dihydro-tetrazole-1-carboxylic acid cyclohexylethyl-amid (PM13, S. 427 - 428 und
Tagungsband: The 1997 Brighton Crop Protection Conference, Weeds (publ. British Crop Protection Council), S. 67-68),
- (h3.16): Benfuresate (PM, S. 98-99), 2,3-Dihydro-3,3-dimethylbenzofuran-5-yl-ethansulfonat,

- (h4): gegen monokotyle und dikotyle Schadpflanzen wirksame Herbizide für den Einsatz im nichtselektiven Bereich oder in spezifisch toleranten Kulturen wie
- (h4.1): Glufosinate (PM, S. 643-645), umfassend auch Glufosinate-P, z.B. 4-[Hydroxy(methyl)phosphinoyl]-DL-homoalanin, 4-[Hydroxy(methyl) phosphinoyl]-L-homoalanin, jeweils bevorzugt als Salze, z.B. Ammonium-oder Alkalimetallsalze wie
(h4.1.1) Glufosinate-ammonium,
(h4.1.2) Glufosinate-P-Ammonium,
(h4.1.3) Glufosinate-Natrium,
(h4.1.3) Glufosinate-Natrium,
(h4.1.4) Glufosinate-P-Natrium,
- (h4.2): Glyphosate (PM, S. 646-649),
N-(Phosphonomethyl)-glycin und dessen Salze und Ester, beispielsweise
(h4.2.1) Glyphosate-isopropylammonium,
(h4.2.2) Glyphosate-sequinatrium,
(h4.2.3) Glyphosate-trimesium,
- (h4.3): Paraquat und dessen Salze wie Paraquat-dichlorid (PM S. 923-925).

Imidazolinone und deren Salze wie
- (h4.4): Imazapyr und dessen Salze und Ester (PM, S. 697-699),
- (h4.5): Imazamethabenz und dessen Salze und Ester (PM, S.694-696),
- (h4.6): Imazamethabenz-methyl (PM, S.694-696),
- (h4.7): Imazapic (AC 263,222) und dessen Salze und Ester, z.B. das Ammoniumsalz, (PM, S.5 und 6, referiert unter AC 263,222).

Als Kombinationspartner (e) kommen vorzugsweise Verbindungen in Frage, die selektiv in Soja sind, beispielsweise
- (hα): selektiv in Soja gegen monokotyle und dikotyle Schadpflanzen wirksame Herbizide, beispielsweise
- (h1.59): Trifluralin (PM, S. 1248-1250),
- (h1.10): Metribuzin (PM, S. 840-841),
- (h1.36): Clomazone (PM, S. 256-257),
- (h1.18): Pendimethalin (PM, S. 937-939),
- (h1.2): Metolachlor (PM, S. 833-834),
- (h1.26): Flumetsulam (PM, S. 573-574),
- (h1.4): Dimethenamid (PM, S. 409-410),
- (h1.22): Linuron (PM, S. 751-753),
- (h1.60): Ethalfluralin PM, S. 473-474),
- (h1.1): Flufenacet (BAY FOE 5043) (PM, S. 82-83),
- (h1.61): Norflurazon (PM, S. 886-888),
- (h1.62): Vernolate (PM, S. 1264-1266),
- (h1.63): Chlortoluron, Chlorotoluron (PM, S. 229-231),
- (h1.27): Cloransulam und Ester wie der Methylester (PM, S. 265),
- (h1.64): Imazethapyr (PM13, S. 558-560),
- (h1.65): Imazamox (PM13, S.552-553),
- (h1.66): Imazaquin (PM13, S. 557-558),

- (hβ): selektiv in Soja gegen dikotyle Schadpflanzen wirksame Herbizide, beispielsweise
- (h2.43): Sulfentrazone (PM, S. 1126-1127),
- (h2.4): Bentazone (PM, S. 109-111),
- (h2.10): Thifensulfuron und dessen Ester, insbesondere der Methylester (PM, S1188-1190),
- (h2.44): Oxyfluorfen (PM, S. 919-921),
- (h2.45): Lactofen (PM, S. 747-748),
- (h2.46): Fomesafen (PM, S. 616-618),
- (h2.47): Flumiclorac (PM, S. 575-576) und dessen Ester wie der Pentylester,
- (h2.18): Acifluorfen und dessen Natriumsalz (PM, S. 12-14),
- (h2.48): 2,4-DB (PM, S. 337-339) und dessen Ester und Salze,
- (h2.49): Flumioxazin (PM13, S. 461-462),
- (h2.50): Benazolin (PM13, S. 62-64),
- (h2.2): 2,4-D (PM, S. 323-327) und dessen Ester und Salze
- (h2.28): Chlorimuron und dessen Ester und Salze wie Chlorirnuron-ethyl

- (hγ): selektiv in Soja gegen monokotyle Schadpflanzen wirksame Herbizide, beispielsweise
- (h3.9): Sethoxydim (PM, S. 1101-1103),
- (h3.10): Cycloxydim (PM, S. 290-291),
- (h3.11): Clethodim (PM, S. 250-251),
- (h3.1): Quizalofop-P und dessen Ester wie der Ethyl- oder Tefurylester (PM, S. 1089-1092),
- (h3.2): Fenoxaprop-P und dessen Ester wie der Ethylester (PM, S. 519-520),
- (h3.3): Fluazifop-P und dessen Ester wie der Butylester (PM, S. 556-557),
- (h3.4): Haloxyfop und Haloxyfop-P und deren Ester wie der Methyl- oder der-etotylester (PM, S. 660-663),
- (h3.5): Propaquizafop (PM, S. 1021-1022),
- (h3.13): Alachlor (PM, S. 23-24),

- (hδ): nicht selektive, zu spezifischen Zwecken in Soja einsetzbare Herbizide, z. B.
- (h4.1): Glufosinate (PM, S. 643-645),
- (h4.2): Glyphosate (PM, S. 646-649),
- (h4.3): Paraquat (Salze) wie Paraquat-dichlorid (PM, S. 923-925),

Ebenfalls bevorzugte Kombinationspartner (h) sind Benozalin, Fenoxaprop, Lactofen, Chlortoluron, Flufenacet, Metribuzin, Benfuresate, Fentrazamid, Mefenacet, Diclofop, Ioxynil, Bromoxynil, Amidosulfuron, Flurtamone, Diflufenican, Ethoxysulfuron, Flucarbazone, Propoxycarbazone, Sutcotrione, Mesotrione, Isoproturon, Iodosulfuron, Mesosulfuron, Foramsulfuron, Anilofos, Oxaziclomefone, Oxadiargyl, Isoxaflutole, Linuron.

Wenn im Rahmen dieser Beschreibung die Kurzform des "common name" verwendet wird, so sind damit alle gängigen Derivate, wie die Ester und Salze, und Isomere, insbesondere optische Isomere umfaßt, insbesondere die handelsüblichen Form bzw. Formen. Die angegebenen chemischen Verbindungsnamen bezeichnen zumindest eine der von dem "common name" umfaßten Verbindungen, häufig eine bevorzugte Verbindung. Bei Sulfonylharnstoffen sind mit Salzen insbesondere auch die umfaßt, die durch Austausch eines Wasserstoffatoms an der Sulfonamidgruppe durch ein Kation entstehen.

Bevorzugt sind Herbizid-Kombinationen aus einem oder mehreren Herbiziden (a) mit einem oder mehreren Herbiziden (h), vorzugsweise aus der Gruppe (h1) oder (h2), (h3) oder (h4). Weiter bevorzugt sind Kombinationen von Herbiziden (a) mit einem oder mehreren Herbiziden (e) nach dem Schema: (a) + (h1), (a) + (h2), (a) + (h3), (a) +(h4), (a) + (h1) + (h2), (a) + (h1) + (h3), (a) + (h1) + (h4), (a) + (h2) + (h3), (a) + (h2) + (h4), (a) + (h3) + (h4) oder (a) + (h1) + (h2) +(h3).

Dabei sind auch solche Kombinationen erfindungsgemäß, denen noch ein oder mehrere weitere von Herbiziden verschiedene agrochemische Wirkstoffe [Wirkstoffe (e)] wie Safener (z.B. Mefenpyr-diethyl, Isoxadifen-ethyl, Cloquintocet-mexyl, 1,8-Naphthalsäureanhydrid, Dichlormid, Benoxacor, Fenclorim, Furilazole oder N-Cyclopropyl-4-[(2-methoxybenzoyl)sulfamoyl]benzamid (siehe WO 99/16744), Insektizide oder Fungizide enthalten sind wie (a) + (h1) + (e), (a) + (h2) + (e) oder (a) + (h3) + (e) , (a) + (h4) + (e), (a) + (h1) + (h2) + (e), (a) + (h1) + (h3) + (e) , (a) + (h1) + (h4) + (e), (a) + (h2) + (h3) + (e), (a) + (h2) + (h4) + (e), (a) + (h3) + (h4) + (e) oder (a) + (h1) + (h2) +(h3) + (e).

Für Kombinationen mit drei oder mehr Wirkstoffen gelten die nachstehend insbesondere für erfindungsgemäße Zweierkombinationen erläuterten bevorzugten Bedingungen in erster Linie ebenfalls, sofern darin die erfindungsgemäßen Zweierkombinationen enthalten sind und bezüglich der betreffenden Zweierkombination.

Die Aufwandmengen der Herbizide (h) können von Herbizid zu Herbizid stark variieren. Als Richtgröße für bevorzugte Aufwandmengen für einige Mischungspartner aus der Gruppe (h) können folgende Angaben [in g AS (Aktivsubstanz)/ha (Hektar)] gelten, wobei in den erfindungsgemäßen Kombinationen auch Mengen unterhalb der niedrigsten Menge sinnvoll sein können:
Herbizide der Gruppe (h1): 10 - 8000, vorzugsweise 50 - 5000 g AS/ha,
Herbizide der Gruppe (h2): 5 - 5000, vorzugsweise 2 - 2500 g AS/ha,
Herbizide der Gruppe (h3): 10 - 500, vorzugsweise 25 - 300 g AS/ha,
Herbizide der Gruppe (h4): 20 - 5000, vorzugsweise 100 - 2000 g AS/ha.

Bereiche für geeignete Mengenverhältnisse der Verbindungen (a) und (e) ergeben sich z.B. aus den genannten Aufwandmengen für die Einzelstoffe. In den erfindungsgemäßen Kombinationen können die Aufwandmengen in der Regel reduziert werden. Bevorzugte Mischungsverhältnisse (a):(e), für die erfindungsgemäßen Kombinationen sind im folgenden aufgeführt:
(a) : (h1) = 10 : 1 bis 1 : 800.000, vorzugsweise 6 : 1 bis 1 : 500.000,
(a) : (h2) = 200 : 1 bis 1 : 500.000, vorzugsweise 5 : 1 bis 1 : 250.000,
(a) : (h3) = 10 : 1 bis 1 : 500.000, vorzugsweise 5 : 1 bis 1 : 250.000,
(a) : (h4) = 5 : 1 bis 1 : 500.000, vorzugsweise 1 : 10 bis 1 : 200.000.

Soweit in den erfindungsgemäßen Ölsuspensionskonzentraten agrochemische Wirkstoffe h) enthalten sind, beträgt deren Gewichtsanteil im allgemeinen 0,5 bis 50 Gew.-%, insbesondere 3 bis 20 Gew.-%.

Der in den erfindungsgemäßen Ölsuspensionskonzentrate enthaltene Gesamtwirkstoffgehalt (Summe der Komponente a) + e) + h) beträgt im allgemeinen 1 bis 80 Gew.-%, insbesondere 2 bis 60 Gew.-%.

Die in den erfindungsgemäßen Ölsuspensionskonzentraten optional enthaltenen Sulfosuccinate (Komponente d) können z.B. Mono- oder Diester der Sulfobemsteinsäure sein, vorzugsweise solche der allgemeinen Formel (II)

R¹-(X¹)ₙ-O-CO-CH₂-CH(SO₃M)-CO-O-(X₂)ₘ-R² (II)

, worin
- R¹: H oder ein unsubstituierter oder substituierter C₁-C₃₀-Kohlenwasserstoffrest wie C₁-C₃₀-Alkyl oder C₇-C₃₀-Alkylaryl bedeutet,
- R²: H oder ein unsubstituierter oder substituierter C₁-C₃₀-Kohlenwasserstoffrest wie C₁-C₃₀-Alkyl oder C₇-C₃₀-Alkylaryl bedeutet, oder ein Kation ist, z.B. ein Metallkation wie ein Alkali- oder Erdalkalimetallkation, oder ein Ammoniumkation wie NH₄, Alkyl-, Alkylaryl- oder Poly(arylalkyl)phenylammoniumkation,
- X¹, X²: unabhängig voneinander gleich oder verschieden eine Spacereinheit wie eine Polyethereinheit oder eine Polyestereinheit bedeuten,
- n,m: unabhängig voneinander gleich oder verschieden Null oder 1 sind, vorzugsweise Null sind, und
- M: ein Kation ist, z.B. ein Metallkation wie ein Alkali- oder Erdalkalimetallkation, oder ein Ammoniumkation wie NH₄, Alkyl-, Alkylaryl- oder Poly(arylalkyl)phenyl-ammoniumkation.

Bevorzugt sind Sulfosuccinate der Formel (II), worin R¹ und R² unabhängig voneinander gleich oder verschieden lineare, verzweigte oder cyclische, gesättigte oder ungesättigte C₁-C₂₀- vorzugsweise C₄-C₁₈-Alkylreste sind, wie Methyl-, Ethyl-, Butyl-, Hexyl-, Cyclohexyl-, Octyl wie 2-Ethylhexyl-, Decyl-, Tridecyl- oder Octadecyl-Reste, oder R¹ und R² sind C₇-C₂₀-Alkylarylreste, wie Nonylphenyl, 2,4,6-Tri-secbutylphenyl, 2,4,6-Tris-(1-phenylethyl)-phenyl, Alkylbenzyl oder ein Hydrozimtrest, X₁ und X₂ unabhängig voneinander gleich oder verschieden Polyethereinheiten sind, wie Polyethylenglykole -(C₂H₄O)ₚ oder Polypropylenglykole -(C₃H₆O)ₚ- mit p=1 bis p=20, insbesondere p=1 bis p=12, oder Polyestereinheiten sind, wie Polyhydroxybuttersäure -(CH[CH₃]-CH₂-COO)_{q}- oder Polymilchsäure -(CH[CH₃]-COO)_{q}- mit q=1 bis q=15, insbesondere q=1 bis q=8, n, m unabhängig voneinander gleich oder verschieden Null oder 1 sind, vorzugsweise Null sind, und M ein Kation ist, z.B. ein Metallkation, wie Alkali- oder Erdalkalimetallkation, oder ein Ammoniumkation, welches alkyl-substituiert sein kann.

Erfindungsgemäß enthaltene Sulfosuccinate sind, beispielsweise
a1) ein- oder zweifach mit linearen, cyclischen oder verzweigten aliphatischen, cycloaliphatischen und/oder aromatischen Alkoholen verestertes Sulfosuccinat, beispielsweise mit 1 bis 22 C-Atomen im Alkylrest, vorzugsweise ein- oder zweifach mit Methanol, Ethanol, (Iso)propanol, (Iso)butanol, (Iso)pentanol, (Iso)hexanol, Cyclohexanol, (Iso)heptanol, (Iso)octanol (insbesondere: Ethylhexanol), (Iso)nonanol, (Iso)decanol, (Iso)undecanol, (Iso)dodecanol oder (Iso)tridecanol verestertes Mono- oder Dialkalisulfosuccinat, insbesondere Mono- oder Dinatriumsulfosuccinat,
a2) ein- oder zweifach mit (Poly) Alkylenoxidaddukten von Alkoholen verestertes Sulfosuccinat, beispielsweise mit 1 bis 22 C-Atomen im Alkylrest und 1 bis 200, vorzugsweise 2 bis 200 Alkylenoxideinheiten im (Poly) Alkylenoxidanteil, vorzugsweise ein- oder zweifach mit Dodecyl/Tetradecyl-Alkohol + 2-5 mol Ethylenoxid oder mit i-Tridecyl+3mol Ethylenoxid verestertes Mono- oder Dialkalisulfosuccinat, insbesondere Mono- oder Dinatriumsulfosuccinat,
a3) das Dialkali, vorzugsweise das Dinatriumsalz von einfach mit Aminen oder aminoterminierten (Poly) Alkylenoxidaddukten von Alkoholen, Aminen, Fettsäuren, Estern oder Amiden umgesetztem und nachfolgend sulfoniertem Maleinsäureanhydrid, beispielsweise mit 1 bis 22 C-Atomen im Alkylrest und 1 bis 200, vorzugsweise 2 bis 200 Alkylenoxy-Einheiten im (Poly) Alkylenoxidteil, vorzugsweise das Dinatriumsalz von einfach mit Kokosfettamin umgesetztem und nachfolgend sulfoniertem Maleinsäureanhydrid,
a4) das Dialkali, vorzugsweise das Dinatriumsalz von einfach mit Amiden oder (Poly) Alkylenoxidaddukten von Amiden umgesetztem und nachfolgend sulfoniertem Maleinsäureanhydrid, beispielsweise mit 1 bis 22 C-Atomen im Alkylrest und 1 bis 200, vorzugsweise 2 bis 200 Alykylenoxy-Einheiten im (Poly) Alkylenoxidteil, vorzugsweise das Dinatriumsalz von einfach mit Oleylamid + 2 mol Ethylenoxid umgesetztem und nachfolgend sulfoniertem Maleinsäureanhydrid und/oder
a5) das Tetraalkali, vorzugsweise das Tetranatriumsalz von N-(1,2-dicarboxyethyl-)-N-Octadecylsulfo-succinamat.

Beispiele kommerziell erhältlicher und im Rahmen der vorliegenden Erfindung bevorzugter Sulfosuccinate der Gruppen a1) bis a5) sind nachfolgend aufgeführt:
a1) Natrium-Dialkylsulfosuccinat, z.B. Natrium-Di(C₄-C₁₈)alkylsulfosuccinat wie Natrium-Diisooctylsulfosuccinat, vorzugsweise Natrium-Di(2-ethylhexyl)sulfosuccinat, kommerziell beispielsweise in Form der Aerosol^{®}-Marken (Cytec), der Agrilan^{®}- oder Lankropol^{®}-Marken (Akzo Nobel), der Empimin^{®}-Marken (Albright&Wilson), der Cropol^{®}-Marken (Croda), der Lutensit^{®}-Marken (BASF) der Triton^{®}-Marken (Union Carbide), der Geropon^{®}-Marken (Rhodia) oder der Imbirol^{®}-, Madeol^{®}- oder Polirol^{®}-Marken (Cesalpinia) erhältlich,
a2) Natrium- Alkoholpolyethylenglykolethersulfosuccinat, kommerziell beispielsweise in Form von Geropon^{®} ACR-Marken (Rhodia) erhältlich,
a3) Dinatrium-Alkoholpolyethylenglykolethersemisulfosuccinat, kommerziell beispielsweise in Form der Aerosol^{®}-Marken (Cytec), der Marlinat^{®}- oder Sermul^{®} Marken (Condea), der Empicol^{®}-Marken (Albright&Wilson), der Secosol^{®}-Marken (Stepan), der Geropon^{®}-Marken (Rhodia), der Disponil^{®}- oder Texapon^{®}-Marken (Cognis) oder der Rolpon^{®}-Marken (Cesalpinia) erhältlich,
a4) Dinatrium-N-Alkylsulfosuccinamat, kommerziell beispielsweise in Form der Aerosol^{®}-Marken (Cytec), der Rewopol^{®}- oder Rewoderm^{®}-Marken (Rewo), der Empimin^{®}-Marken (Albright&Wilson), der Geropon^{®}-Marken (Rhodia) oder der Polirol^{®}-Marken (Cesalpinia) erhältlich,
a5) Dinatrium-Fettsäureamidpolyethylenglykolethersemisulfosuccinat, kommerziell beispielsweise in Form der Elfanol^{®}- oder Lankropol^{®}-Marken (Akzo Nobel), der Rewoderm^{®}-, Rewocid^{®}- oder Rewopol^{®}-Marken (Rewo), der Emcol^{®}-Marken (Witco), der Standapol^{®}-Marken (Cognis) oder der Rolpon^{®}-Marken (Cesalpinia) erhältlich, und
a6) Tetranatrium-N-(1,2-dicarboxyethyl)-N-Octadecyl-sulfosuccinamat, kommerziell beispielsweise in Form von Aerosol 22^{®}- (Cytec) erhältlich.

Kommerziell sind Sulfosuccinate zum Beispiel als Aerosol^{®}- (Cytec), Agrilan^{®}- oder Lankropol^{®}- (Akzo Nobel), Empimin^{®}- (Huntsman), Cropol^{®}- (Croda), Lutensit^{®}-(BASF), Triton^{®}GR-Reihe (UnionCarbide), Imbirol^{®}-/Madeol^{®}-/Polirol^{®}- (Cesalpinia); Geropon^{®}AR-Reihe oder Geropon^{®}SDS (Rhodia) erhältlich.

Bevorzugte Sulfosuccinate sind z.B. die Natrium-, Kalium- und Ammoniumsalze von Bis(alkyl)sulfosuccinaten, wobei die Alkylreste gleich oder verschieden 4 bis 16 Kohlenstoffatome enthalten, und bevorzugt Butyl-, Hexyl-, Octyl- wie 2-Ethylhexyl- oder Decyl-Reste sind, die linear oder verzweigt sein können. Besonders bevorzugt ist Di(C₄-C₁₀-alkyl)sulfosuccinat Natrium wie Di(2-Ethylhexyl)sulfosuccinat Natrium.

Soweit in den erfindungsgemäßen Ölsuspensionskonzentraten Sulfosuccinate d) enthalten sind, beträgt deren Gewichtsanteil im allgemeinen 0,5 bis 60 Gew.-%, insbesondere 1 bis 30 Gew.-%.

Bei den in den erfindungsgemäßen Ölsuspensionskonzentraten optional enthaltenen anorganischen Salzen (Komponente f) handelt es sich vorzugsweise um basische anorganische Salze. Hierunter werden Salze verstanden, welche in 1 %iger wässriger Lösung einen pH-Wert > 7 aufweisen, vorzugsweise schwach basische Salze mit einem pH-Wert zwischen 7 und 11. Beispiele solcher Salze sind Carbonate, Hydrogencarbonate, Hydroxide, Oxide, Hypochlorite und Sulfite, bevorzugt Carbonate und Hydrogencarbonate. Als Kationen enthalten die anorganischen Salze bevorzugt Metallionen, insbesondere Alkali-, Erdalkali- und Übergangsmetallionen, vorzugsweise Alkali- und Erdalkalimetallionen wie Natrium, Kalium, Magnesium oder Calcium. Besonders bevorzugte Salze sind Alkalimetallsalze, insbesondere Alkalimetallcarbonate und Alkalimetallhydrogencarbonate wie Na₂CO₃, K₂CO₃, NaHCO₃ und KHCO₃. Die anorganischen Salze können allein oder im Gemisch enthalten sein.

Soweit in den erfindungsgemäßen Ölsuspensionskonzentraten anorganische Salze f) enthalten sind, beträgt deren Gewichtsanteil im allgemeinen 0,01 bis 20 Gew.-%, bevorzugt 0,01 bis 10 Gew.-%, besonders bevorzugt 0,05 bis 5 Gew.-%.

Als übliche Hilfs- und Zusatzstoffe (Komponente g) können in den erfindungsgemäßen Ölsuspensionskonzentraten z.B. noch enthalten sein: Tenside wie Emulgatoren und Dispergatoren, Verdickungs- und Thixotropiermittel, Netz-, Anti-Drift-, Haft-, Penetrations-, Konservierungs- und Frostschutzmittel, Antioxidantien, Lösungsvermittler, Füll-, Träger- und Farbstoffe, Entschäumer, Düngemittel, Verdunstungshemmer, sowie den pH-Wert und die Viskosität beeinflussende Mittel.

Als nichtionische Emulgatoren und Dispergatoren c) kommen in Frage:
1) polyalkoxylierte, vorzugsweise polyethoxylierte, gesättigte und ungesättigte aliphatische Alkohole,
   . mit 8 bis 24 C-Atomen im Alkylrest, der sich von den entsprechenden Fettsäuren oder aus petrochemischen Produkten ableitet, und
   . mit 1 bis 100, vorzugsweise 2 bis 50, Ethylenoxideinheiten (EO), wobei die freie Hydroxy-Gruppe gegebenenfalls alkoxyliert ist,
   . die z. B. kommerziell als Genapol^{®} X- und Genapol^{®}O-Reihe (Clariant), Crovol^{®}M-Reihe (Croda) oder Lutensol^{®}Reihe (BASF) erhältlich sind,
2) polyalkoxylierte, vorzugsweise polyethoxylierte Arylalkylphenole, wie z. B. 2,4,6-Tris-(1-phenylethyl)-phenol (Tristyrylphenol) mit einem mittleren Ethoxylierungsgrad zwischen 10 und 80, bevorzugt 16 bis 40, wie z. B. Soprophor^{®}BSU (Rhodia) oder HOE S 3474 (Clariant),
3) polyalkoxylierte, vorzugsweise polyethoxylierte Alkylphenole mit einem oder mehreren Alkylresten, wie z. B. Nonylphenol oder Tri-sec-butylphenol, und einem Ethoxylierungsgrad zwischen 2 und 40, bevorzugt 4 bis 15, wie z. B. Arkopal^{®}N-Reihe oder Sapogenat^{®}T-Reihe (Clariant),
4) polyalkoxylierte, vorzugsweise polyethoxylierte Hydroxyfettsäuren oder Hydroxyfettsäuren enthaltene Glyceride, wie z. B. Ricinin bzw. Rizinusöl, mit einem Ethoxylierungsgrad zwischen 10 und 80, bevorzugt 25 bis 40, wie z. B. Emulsogen^{®}EL-Reihe (Clariant) oder Agnique^{®}CSO-Reihe (Cognis),
5) polyalkoxylierte, vorzugsweise polyethoxylierte Sorbitanester, wie z. B. Atplus^{®}309 F (Uniqema) oder Alkamuls^{®}-Reihe (Rhodia),
6) polyalkoxylierte, vorzugsweise polyethoxylierte Amine, wie z.B. Genamin^{®} - Reihe (Clarian), Imbentin^{®} CAM - Reihe (Kolb) oder Lutensol^{®} FA - Reihe (BASF),
7) Di- und Tri-block-copolymere, z.B. aus Alkylenoxiden; z.B. aus Ethylen- und Propylenoxid mit mittleren Molmassen zwischen 200 und 10000, vorzugsweise 1000 bis 4000 g/mol, wobei der Massenanteil des polyethoxylierte Blocks zwischen 10 und 80% variiert, wie z. B. Genapol^{®}PF-Reihe (Clariant), Pluronic^{®}-Reihe (BASF), oder Synperonic^{®}PE-Reihe (Uniqema),

Bevorzugte nichtionische Emulgatoren und Dispergatoren sind z.B. polyethoxylierte Alkohole, polyethoxylierte Triglyceride, die Hydroxyfettsäuren enthalten und Polyethylenoxid-Polypropylenoxid-Block-Copolymere.

Der Gewichtsanteil der nichtionischen Emulgatoren und Dispergatoren beträgt im allgemeinen zwischen 1 und 20 Gew.-%.

Es kommen auch ionische Emulgatoren und Dispergatoren in Frage, z.B.:
1) polyalkoxylierte, vorzugsweise polyethoxylierte Emulgatoren/Dispergatoren (vgl. Komponente e), die ionisch modifiziert sind, z. B. durch Umsetzung der endständigen freien Hydroxylfunktion des Polyethylenoxidblocks zu einem Sulfat- oder Phosphatester (z. B. als Alkali- und Erdalkalimetallsalze), wie z. B. Genapol^{®}LRO oder Dispergiermittel 3618 (Clariant), Emulphor^{®} (BASF) oder Crafol^{®}AP (Cognis),
2) Alkali- und Erdalkalimetallsalze von Alkylarylsulfonsäuren mit linearer oder verzweigter Alkylkette, wie Phenylsulfonat CA oder Phenylsulfonat CAL (Clariant), Atlox^{®} 3377BM (ICI), Empiphos^{®}TM-Reihe (Huntsman)
3) Polyelektrolyte, wie Ligninsulfonate, Kondensationsprodukte aus Naphthalinsulfonat und Formaldehyd, Polystyrolsulfonat oder sulfonierte ungesättigte oder aromatische Polymere (Polystyrole, Polybutadiene oder Polyterpene), wie Tamol^{®}-Reihe (BASF), Morwet^{®}D425 (Witco), Kraftsperse^{®}-Reihe (Westvaco), Borresperse^{®} Reihe (Borregard).

Bevorzugte ionische Emulgatoren/Dispergatoren sind z.B. Salze von Alkylarylsulfonsäuren und Polyelektrolyte aus der Polykondensation von Naphthalinsulfonat und Formaldehyd.

Soweit in den erfindungsgemäßen Ölsuspensionskonzentraten ionische Emulgatoren und Dispergatoren enthalten sind, beträgt deren Gewichtsanteil im allgemeinen 0,1 bis 20 Gew.-%, insbesondere 0,5 bis 8 Gew.-%.

Werden nichtionische oder ionische Emulgatoren und Dispergatoren, neben ihren emulgierenden/dispergierenden Eigenschaften, auch zur Erhöhung der biologischen Effektivität, z. B. als Penetrations- oder Haftmittel, eingesetzt, kann sich ihr Anteil in den erfindungsgemäßen Ölsuspensionskonzentraten auf bis zu 60 Gew.-% erhöhen.

Als Verdickungs- und Thixotropiermittel kommen z.B. in Frage:
1) modifizierte natürliche Silikate, wie chemisch modifizierte Bentonite, Hectorite, Attapulgite, Montmorillonite, Smektite oder andere Silikatmineralien, wie Bentone^{®} (Elementis), Attagel^{®} (Engelhard), Agsorb^{®} (Oil-Dri Corporation) oder Hectorite^{®} (Akzo Nobel)
2) synthetische Silikate, wie Silikate der Sipernat^{®}-, Aerosil^{®}- oder Durosil^{®}-Reihe (Degussa), der CAB-O-SIL^{®}-Reihe (Cabot) oder der Van Gel-Reihe (R.T. Vanderbilt),
3) Verdicker auf Basis synthetischer Polymere, wie Verdicker der Thixin^{®}- oder Thixatrol^{®}-Reihe (Elementis).
4) Verdicker auf Basis natürlicher Polymere und natürlicher Öle, z.B. aus der Thixin^{®}- oder Thixatrol^{®}-Reihe (Elementis).

Bevorzugte Verdickungs- und Thixotropiermittel sind z.B. modifizierte Schichtsilikate und Verdicker auf Basis synthetischer Polymere.

Soweit in den erfindungsgemäßen Ölsuspensionskonzentraten Verdickungs- und Thixotropiermittel enthalten sind, beträgt deren Gewichtsanteil im allgemeinen 0,1 bis 5 Gew.%, insbesondere 0,2 bis 3 Gew.-%.

Bevorzugt sind erfindungsgemäße Ölsuspensionskonzentrate, enthaltend:
a) 0,01 bis 50 Gew.-%, vorzugsweise 0,1 bis 30 Gew.-% eines oder mehrerer herbizider Wirkstoffe aus der Gruppe der Pyridyl-Sulfonylharnstoffe, vorzugsweise Dioxazin-Pyridylsulfonylhamstoffe, insbesondere solche der Formel (I) und/oder deren Salze,
b) 5 bis 95 Gew.-%, vorzugsweise 20 bis 80 Gew.-% eines oder mehrerer Lösungsmittel,
e) optional 0,1 bis 60 Gew.-%, vorzugsweise 2 bis 40 Gew.-% eines oder mehrerer Safener,
d) optional 0,5 bis 60 Gew.-%, vorzugsweise 1 bis 30 Gew.-% eines oder mehrerer Sulfosuccinate,
h) optional 0,5 bis 50 Gew.-%, vorzugsweise 3 bis 20 Gew.-% eines oder mehrerer von a) und c) verschiedener agrochemischer Wirkstoffe,
f) optional 0,01 bis 20 Gew.-%, vorzugsweise 0,01 bis 10 Gew.-% eines oder mehrerer anorganischer Salze,
c) 1 bis 20 Gew.-% eines oder mehrerer nichtionischer Emulgatoren und Dispergatoren,
g) optional 1 bis 20 Gew.-% eines oder mehrerer ionischer Emulgatoren und Dispergatoren, optional 0,1 bis 5 Gew.-%, vorzugsweise 0,2 bis 3 Gew.-% eines oder mehrerer Verdickungs- und Thixotriopiermittel.

In einer bevorzugten Ausführungsform enthält das erfindungsgemäße Ölsuspensionskonzentrat
a) ein oder mehrere herbizide Wirkstoffe der Formel (I) und/oder deren Salze, vorzugsweise I-1 bis I-145,
b) ein oder mehrere organische Lösungsmittel aus der Gruppe der aliphatischen oder aromatischen Kohlenwasserstoffe und der Pflanzenöle wie Rapsölmethylester, und
d) eines oder mehrerer Sulfosuccinate, vorzugsweise Di(C₄-C₁₆-alkyl)sulfosuccinate wie Di(2-Ethylhexyl)sulfosuccinat-Natrium, und/oder
f) eines oder mehrere anorganische Salze.
c) nicht-ionische Emulgatoren und Dispergatoren

Als besonders bevorzugte Beispiele seien erfindungsgemäße Ölsuspensionskonzentrate genannt, welche die nachfolgend genannten Komponenten enthalten, ohne dass dadurch eine Einschränkung erfolgen soll. Dabei bedeutet Solvesso ein Lösungsmittel aus der Solvesso^{®}-Reihe, vorzugsweise Solvesso^{®}200, Bayol ein Lösungsmittel aus der Bayol^{®}-Reihe, vorzugsweise Bayol^{®}82, Edenor = Edenor^{®}MESU und Actirob = Actirob^{®}B.

Solvesso + I-1, Bayol + I-1, Edenor + I-1, Actirob B + I-1, Solvesso + I-2, Bayol + I-2, Edenor + I-2, Actirob B + I-2, Solvesso + I-3, Bayol + I-3, Edenor + I-3, Actirob B + I-3, Solvesso + I-4, Bayol + I-4, Edenor + I-4, Actirob B + I-4, Solvesso + I-5, Bayol + I-5, Edenor + I-5, Actirob B + I-5, Solvesso + I-6, Bayol + I-6, Edenor + I-6, Actirob B + I-6, Solvesso + I-7, Bayol + I-7, Edenor + I-7, Actirob B + I-7, Solvesso + I-8, Bayol + I-8, Edenor + I-8, Actirob B + I-8, Solvesso + I-9, Bayol + I-9, Edenor + I-9, Actirob B + I-9, Solvesso + I-10, Bayol + I-10, Edenor + I-10, Actirob B + I-10, Solvesso + I-11, Bayol + I-11, Edenor + I-11, Actirob B + I-11, Solvesso + I-12, Bayol + I-12, Edenor + I-12, Actirob B + I-12, Solvesso + I-13, Bayol + I-13, Edenor + I-13, Actirob B + I-13, Solvesso + I-14, Bayol + I-14, Edenor + I-14, Actirob B + I-14, Solvesso + I-15, Bayol + I-15, Edenor + I-15, Actirob B + I-15, Solvesso + I-16, Bayol + I-16, Edenor + I-16, Actirob B + I-16, Solvesso + I-17, Bayol + I-17, Edenor + I-17, Actirob B + I-17, Solvesso + I-18, Bayol + I-18, Edenor + I-18, Actirob B + I-18, Solvesso + I-19, Bayol + I-19, Edenor + I-19, Actirob B + I-19, Solvesso + I-20, Bayol + I-20, Edenor + I-20, Actirob B + I-20, Solvesso + I-21, Bayol + I-21, Edenor + I-21, Actirob B + I-21, Solvesso + I-22, Bayol + I-22, Edenor + I-22, Actirob B + I-22, Solvesso + I-23, Bayol + I-23, Edenor + I-23, Actirob B + I-23, Solvesso + I-24, Bayol + I-24, Edenor + I-24, Actirob B + I-24, Solvesso + I-25, Bayol + I-25, Edenor + I-25, Actirob B + I-25, Solvesso + I-26, Bayol + I-26, Edenor + I-26, Actirob B + I-26, Solvesso + I-27, Bayol + I-27, Edenor + I-27, Actirob B + I-27, Solvesso + I-28, Bayol + I-28, Edenor + I-28, Actirob B + I-28, Solvesso + I-29, Bayol + I-29, Edenor + I-29, Actirob B + I-29, Solvesso + I-30, Bayol + I-30, Edenor + I-30, Actirob B + I-30, Solvesso + I-31, Bayol + I-31, Edenor + I-31, Actirob B + I-31, Solvesso + I-32, Bayol + I-32, Edenor + I-32, Actirob B + I-32, Solvesso + I-33, Bayol + I-33, Edenor + I-33, Actirob B + I-33, Solvesso + I-34, Bayol + I-34, Edenor + I-34, Actirob B + I-34, Solvesso + I-35, Bayol + I-35, Edenor + I-35, Actirob B + I-35, Solvesso + I-36, Bayol + I-36, Edenor + I-36, Actirob B + I-36, Solvesso + I-37, Bayol + I-37, Edenor + I-37, Actirob B + I-37, Solvesso + I-38, Bayol + I-38, Edenor + I-38, Actirob B + I-38, Solvesso + I-39, Bayol + I-39, Edenor + I-39, Actirob B + I-39, Solvesso + I-40, Bayol + I-40, Edenor + I-40, Actirob B + I-40, Solvesso + I-41, Bayol + I-41, Edenor + I-41, Actirob B + I-41, Solvesso + I-42, Bayol + I-42, Edenor + I-42, Actirob B + I-42, Solvesso + I-43, Bayol + I-43, Edenor + I-43, Actirob B + I-43, Solvesso + I-44, Bayol + I-44, Edenor + I-44, Actirob B + I-44, Solvesso + I-45, Bayol + I-45, Edenor + I-45, Actirob B + I-45, Solvesso + I-46, Bayol + I-46, Edenor + I-46, Actirob B + I-46, Solvesso + I-47, Bayol + I-47, Edenor + I-47, Actirob B + I-47, Solvesso + I-48, Bayol + I-48, Edenor + I-48, Actirob B + I-48, Solvesso + I-49, Bayol + I-49, Edenor + I-49, Actirob B + I-49, Solvesso + I-50, Bayol + I-50, Edenor + I-50, Actirob B + I-50, Solvesso + I-51, Bayol + I-51, Edenor + I-51, Actirob B + I-51, Solvesso + I-52, Bayol + I-52, Edenor + I-52, Actirob B + I-52, Solvesso + I-53, Bayol + I-53, Edenor + I-53, Actirob B + I-53, Solvesso + I-54, Bayol + I-54, Edenor + I-54, Actirob B + I-54, Solvesso + I-55, Bayol + I-55, Edenor + I-55, Actirob B + I-55, Solvesso + I-56, Bayol + I-56, Edenor + I-56, Actirob B + I-56, Solvesso + I-57, Bayol + I-57, Edenor + I-57, Actirob B + I-57, Solvesso + I-58, Bayol + I-58, Edenor + I-58, Actirob B + I-58, Solvesso + I-59, Bayol + 1-59, Edenor + I-59, Actirob B + I-59, Solvesso + I-60, Bayol + I-60, Edenor + I-60, Actirob B + I-60, Solvesso + I-61, Bayol + I-61, Edenor + I-61, Actirob B + I-61, Solvesso + I-62, Bayol + I-62, Edenor + I-62, Actirob B + I-62, Solvesso + I-63, Bayol + I-63, Edenor + I-63, Actirob B + I-63, Solvesso + I-64, Bayol + I-64, Edenor + I-64, Actirob B + I-64, Solvesso + I-65, Bayol + I-65, Edenor + I-65, Actirob B + I-65, Solvesso + I-66, Bayol + I-66, Edenor + I-66, Actirob B + I-66, Solvesso + I-67, Bayol + I-67, Edenor + I-67, Actirob B + I-67, Solvesso + I-68, Bayol + I-68, Edenor + I-68, Actirob B + I-68, Solvesso + I-69, Bayol + I-69, Edenor + I-69, Actirob B + I-69, Solvesso + I-70, Bayol + I-70, Edenor + I-70, Actirob B + I-70, Solvesso + I-71, Bayol + I-71, Edenor + I-71, Actirob B + I-71, Solvesso + I-72, Bayol + I-72, Edenor + I-72, Actirob B + I-72, Solvesso + I-73, Bayol + I-73, Edenor + I-73, Actirob B + I-73, Solvesso + I-74, Bayol + I-74, Edenor + I-74, Actirob B + I-74, Solvesso + 1-75, Bayol + I-75, Edenor + I-75, Actirob B + I-75, Solvesso + I-76, Bayol + I-76, Edenor + I-76, Actirob B + I-76, Solvesso + I-77, Bayol + I-77, Edenor + I-77, Actirob B + I-77, Solvesso + I-78, Bayol + I-78, Edenor + I-78, Actirob B + I-78, Solvesso + I-79, Bayol + I-79, Edenor + I-79, Actirob B + I-79, Solvesso + I-80, Bayol + I-80, Edenor + I-80, Actirob B + I-80, Solvesso + I-81, Bayol + I-81, Edenor + I-81, Actirob B + I-81, Solvesso + I-82, Bayol + I-82, Edenor + I-82, Actirob B + I-82, Solvesso + I-83, Bayol + I-83, Edenor + I-83, Actirob B + I-83, Solvesso + I-84, Bayol + I-84, Edenor + I-84, Actirob B + I-84, Solvesso + I-85, Bayol + I-85, Edenor + I-85, Actirob B + I-85, Solvesso + I-86, Bayol + I-86, Edenor + I-86, Actirob B + I-86, Solvesso + I-87, Bayol + I-87, Edenor + I-87, Actirob B + I-87, Solvesso + I-88, Bayol + I-88, Edenor + I-88, Actirob B + I-88, Solvesso + I-89, Bayol + I-89, Edenor + I-89, Actirob B + I-89, Solvesso + I-90, Bayol + I-90, Edenor + I-90, Actirob B + I-90, Solvesso + I-91, Bayol + I-91, Edenor + I-91, Actirob B + I-91, Solvesso + I-92, Bayol + I-92, Edenor + I-92, Actirob B + I-92, Solvesso + I-93, Bayol + I-93, Edenor + I-93, Actirob B + I-93, Solvesso + I-94, Bayol + I-94, Edenor + I-94, Actirob B + I-94, Solvesso + I-95, Bayol + I-95, Edenor + I-95, Actirob B + I-95, Solvesso + I-96, Bayol + I-96, Edenor + I-96, Actirob B + I-96, Solvesso + I-97, Bayol + I-97, Edenor + I-97, Actirob B + I-97, Solvesso + I-98, Bayol + I-98, Edenor + I-98, Actirob B + I-98, Solvesso + I-99, Bayol + I-99, Edenor + I-99, Actirob B + I-99, Solvesso + I-100, Bayol + I-100, Edenor + I-100, Actirob B + I-100, Solvesso + I-101, Bayol + I-101, Edenor + I-101, Actirob B + I-101, Solvesso + I-102, Bayol + I-102, Edenor + I-102, Actirob B + I-102, Solvesso + I-103, Bayol + I-103, Edenor + I-103, Actirob B + I-103, Solvesso + I-104, Bayol + I-104, Edenor + I-104, Actirob B + I-104, Solvesso + I-105, Bayol + I-105, Edenor + I-105, Actirob B + I-105, Solvesso + I-106, Bayol + I-106, Edenor + I-106, Actirob B + I-106, Solvesso + I-107, Bayol + I-107, Edenor + I-107, Actirob B + I-107, Solvesso + I-108, Bayol + I-108, Edenor + I-108, Actirob B + I-108, Solvesso + I-109, Bayol + I-109, Edenor + I-109, Actirob B + I-109, Solvesso + I-110, Bayol + I-110, Edenor + I-110, Actirob B + I-110, Solvesso + I-111, Bayol + I-111, Edenor + I-111, Actirob B + I-111, Solvesso + I-112, Bayol + I-112, Edenor + I-112, Actirob B + I-112, Solvesso + I-113, Bayol + I-113, Edenor + I-113, Actirob B + I-113, Solvesso + I-114, Bayol + I-114, Edenor + 1-114, Actirob B + I-114, Solvesso + I-115, Bayol + I-115, Edenor + I-115, Actirob B + I-115, Solvesso + I-116, Bayol + I-116, Edenor + I-116, Actirob B + I-116, Solvesso + I-117, Bayol + I-117, Edenor + I-117, Actirob B + I-117, Solvesso + I-118, Bayol + I-118, Edenor + I-118, Actirob B + I-118, Solvesso + I-119, Bayol + I-119, Edenor + I-119, Actirob B + I-119, Solvesso + I-120, Bayol + I-120, Edenor + I-120, Actirob B + I-120, Solvesso + I-121, Bayol + I-121, Edenor + I-121, Actirob B + I-121, Solvesso + I-122, Bayol + I-122, Edenor + I-122, Actirob B + I-122, Solvesso + I-123, Bayol + I-123, Edenor + I-123, Actirob B + I-123, Solvesso + I-124, Bayol + I-124, Edenor + I-124, Actirob B + I-124, Solvesso + I-125, Bayol + I-125, Edenor + I-125, Actirob B + I-125, Solvesso + I-126, Bayol + I-126, Edenor + I-126, Actirob B + I-126, Solvesso + I-127, Bayol + I-127, Edenor + I-127, Actirob B + I-127, Solvesso + I-128, Bayol + I-128, Edenor + I-128, Actirob B + I-128, Solvesso + I-129, Bayol + I-129, Edenor + I-129, Actirob B + I-129, Solvesso + I-130, Bayol + I-130, Edenor + I-130, Actirob B + I-130, Solvesso + I-131, Bayol + I-131, Edenor + I-131, Actirob B + I-131, Solvesso + I-132, Bayol + I-132, Edenor + I-132, Actirob B + I-132, Solvesso + I-133, Bayol + I-133, Edenor + I-133, Actirob B + I-133, Solvesso + I-134, Bayol + I-134, Edenor + I-134, Actirob B + I-134, Solvesso + I-135, Bayol + I-135, Edenor + I-135, Actirob B + I-135, Solvesso + I-136, Bayol + I-136, Edenor + I-136, Actirob B + I-136, Solvesso + I-137, Bayol + I-137, Edenor + I-137, Actirob B + I-137, Solvesso + I-138, Bayol + I-138, Edenor + I-138, Actirob B + I-138, Solvesso + I-139, Bayol + I-139, Edenor + I-139, Actirob B + I-139, Solvesso + I-140, Bayol + I-140, Edenor + I-140, Actirob B + I-140, Solvesso + I-141, Bayol + I-141, Edenor + I-141, Actirob B + I-141, Solvesso + I-142, Bayol + 1-142, Edenor + I-142, Actirob B + I-142, Solvesso + I-143, Bayol + I-143, Edenor + I-143, Actirob B + I-143, Solvesso + I-144, Bayol + I-144, Edenor + I-144, Actirob B + I-144, Solvesso + I-145, Bayol + I-145, Edenor + I-145, Actirob B + I-145.

Bevorzugt enthalten die vorgenannten Kombinationen eines oder mehrere Sulfosuccinate d) insbesondere Di(2-Ethylhexyl)sulfosuccinat-Natrium.

Sämtliche vorgenannten Kombinationen können auch einen oder mehrere Safener (e) enthalten, insbesondere ausgewählt aus der Gruppe (S1-1), (S1-6), (S1-9), (S2-1), (S3-1), (S-4) und/oder einen oder mehrere agrochemische Wirkstoffe (h), insbesondere ausgewählt aus den Gruppen (h1.1 ) - (h1.66), (h2.1) - (h2.50), (h3.1) - (h3.16), (h4.1) - (h4.7).

Weiterhin können eines oder mehrere anorganische Salze f) sowie übliche Hilfs- und Zusatzstoffe g) enthalten sein.

Sofern in den erfindungsgemäßen Ölsuspensionskonzentraten als Komponente a) mehrere Dioxazin-Pyridyl-Sulfonylharnstoffe enthalten sind, z.B. Mischungen von Dioxazin-Pyridyl-Sulfonylharnstoffen der Formel (I) und/oder deren Salzen, liegt zumindest einer der Dioxazin-Pyridyl-Sulfonylharnstoffe in suspendierter Form vor, es können auch aller Dioxazin-Pyridyl-Sulfonylharnstoffe suspendiert vorliegen.

Die erfindungsgemäßen Ölsuspensionskonzentrate können durch bekannte Verfahren, z.B. durch Vermischen der Komponenten hergestellt werden. So kann z.B. eine Vormischung hergestellt werden, indem dem organischen Lösungsmittel b) gegebenenfalls enthaltenes Sulfosuccinat d) und gegebenenfalls weitere Hilfs- und Zusatzstoffe g) zugegeben werden. Dann werden gegebenenfalls verwendete lösliche agrochemische Wirkstoffe e) und h) in der Vormischung gelöst. Nach Abschluß des Lösungsprozesses wird fester Dioxazin-Pyridyl-Sulfonylharnstoff a) und gegebenenfalls verwendete unlösliche Wirkstoffe e) und h) sowie anorganische Salze f) in die Mischung suspendiert. Die grobe Suspension wird, gegebenenfalls nach einer Vorvermahlung, einer Feinvermahlung unterzogen.

In einer anderen Ausführungsvariante wird feste Dioxazin-Pyridyl-Sulfonylharnstoff a), sowie gegebenenfalls verwendete unlösliche Komponenten e), h), f) und g), in das organische Lösungsmittel b), welches optional ein Sulfosuccinat d) enthält, suspendiert und einer Vermahlung unterzogen. Gegebenenfalls verwendete lösliche Wirkstoffe e) und h) sowie Hilfs- und Zusatzstoffe aus g), die keiner Vermahlung bedürfen oder für den Mahlvorgang nicht notwendig sind, werden nach der Vermahlung zugesetzt.

Zur Herstellung der Mischungen können gängige Mischapparate verwendet werden, die gegebenenfalls temperiert werden. Zur Vorvermahlung können z.B. Hochdruckhomogenisatoren oder nach dem Rotor-Stator Prinzip arbeitende Mühlen verwendet werden, wie Ultraturax-Homogenisatoren, z.B. der Fa. IKA, oder Zahnkolloidmühlen, z.B. der Fa. Puck. Für die Feinvermahlung können z.B. diskontinuierliche Pedmühlen, z.B. der Fa. Drais oder kontinuierliche Perlmühlen, der z.B. Fa. Bachofen verwendet werden. Je nach den Eigenschaften der gegebenenfalls vorbehandelten Komponenten, sowie verfahrens- und sicherheitstechnischen Anforderungen und aus wirtschaftlichen Gründen, kann das Herstellverfahren angepaßt und gegebenenfalls auf eine Vorvermahlung oder auch auf eine Feinvermahlung der Suspension verzichtet werden.

Die zur Herstellung eingesetzten Komponenten a) bis f) können Wasser als Nebenbestandteil enthalten, welches sich in den erfindungsgemäßen Ölsuspensionskonzentraten wiederfindet. Die erfindungsgemäßen Ölsuspensionskonzentrate können daher geringe Mengen von Wasser enthalten, im allgemeinen von 0 bis 5 Gew.-%. Bevorzugterweise werden die erfindungsgemäßen Ölsuspensionskonzentrate keinem Trocknungsprozeß unterzogen.

Zur Anwendung können die erfindungsgemäßen Ölsuspensionskonzentrate gegebenenfalls in üblicher Weise verdünnt werden (z.B. mittels Wasser), z.B. zu Suspensionen, Emulsionen, Suspoemulsionen oder Lösungen, vorzugsweise zu Emulsionen. Es kann vorteilhaft sein, erhaltenen Spritzbrühen weitere agrochemische Wirkstoffe (z.B. Tankmischpartner in Form entsprechender Formulierungen) und/oder zur Anwendung übliche Hilfs- und Zusatzstoffe, z.B. selbstemulgierende Öle wie Pflanzenöle oder Paraffinöle und/oder Düngemittel zuzugeben. Gegenstand der vorliegenden Erfindung sind daher auch solche herbiziden Mittel, auf Basis der erfindungsgemäßen Ölsuspensionskonzentrate.

Die erfindungsgemäßen Ölsuspensionskonzentrate und die daraus durch Verdünnen erhältlichen Anwendungsformen (zusammen "erfindungsgemäße herbizide Mittel") weisen eine ausgezeichnete herbizide Wirksamkeit gegen ein breites Spektrum wirtschaftlich wichtiger mono- und dikotyler Schadpflanzen auf, einschließlich Arten die resistent sind gegen herbizide Wirkstoffe wie Glyphosate, Glufosinate, Atrazin oder Imidazolinon-Herbizide. Auch schwer bekämpfbare perennierende Unkräuter, die aus Rhizomen, Wurzelstöcken oder anderen Dauerorganen austreiben, werden durch die Wirkstoffe gut erfaßt. Dabei kann die Applikation im Vorsaat-, Vorauflauf- oder Nachauflaufverfahren erfolgen. Bevorzugt erfolgt die Applikation dabei auf die aufgelaufenen Schadpflanzen (z.B. Unkräuter oder unerwünschte Kulturpflanzen), insbesondere vor dem Auflaufen der (erwünschten) Kulturpflanzen.
Im einzelnen seien beispielhaft einige Vertreter der mono- und dikotylen Unkrautflora genannt, die durch die erfindungsgemäßen Verbindungen kontrolliert werden können, ohne daß durch die Nennung eine Beschränkung auf bestimmte Arten erfolgen soll.

Auf der Seite der monokotylen Unkrautarten werden z.B. Avena spp., Alopecurus spp., Brachiaria spp., Digitaria spp., Lolium spp., Echinochloa spp., Panicum spp., Phalaris spp., Poa spp., Setaria spp. sowie Cyperusarten aus der annuellen Gruppe und auf seiten der perennierenden Spezies Agropyron, Cynodon, Imperata sowie Sorghum und auch ausdauernde Cyperusarten gut erfaßt.

Bei dikotylen Unkrautarten erstreckt sich das Wirkungsspektrum auf Arten wie z.B. Abutilon spp., Amaranthus spp., Chenopodium spp., Chrysanthemum spp., Galium spp., Ipomoea spp., Kochia spp., Lamium spp., Matricaria spp., Pharbitis spp., Polygonum spp.,Sida spp., Sinapis spp., Solanum spp., Stellaria spp., Veronica spp. und Viola spp., Xanthium spp., auf der annuellen Seite sowie Convolvulus, Cirsium, Rumex und Artemisia bei den perennierenden Unkräutern.

Werden die erfindungsgemäßen herbiziden Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der herbiziden Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Die erfindungsgemäßen herbiziden Mittel zeichnen sich durch eine schnell einsetzende und lang andauernde herbizide Wirkung aus. Die Regenfestigkeit der Wirkstoffe in den erfindungsgemäßen Kombinationen ist in der Regel günstig. Als besonderer Vorteil fällt ins Gewicht, daß die verwendeten und wirksamen Dosierungen von Verbindungen (a) so gering eingestellt werden können, daß ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäßen Kombination von Wirkstoffen wird eine erhebliche Reduzierung der nötigen Aufwandmenge der Wirkstoffe ermöglicht.

Die genannten Eigenschaften und Vorteile sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Kombinationen hinsichtlich der beschriebenen Eigenschaften deutlich übertroffen.

Darüberhinaus weisen die erfindungsgemäßen Mittel teilweise hervorragende wachstumsregulatorische Eigenschaften bei den Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die Mittel zur Bekämpfung von Schadpflanzen in bekannten Pflanzenkulturen oder noch zu entwickelnden toleranten oder gentechnisch veränderten Kulturpflanzen eingesetzt werden. Die transgenen Pflanzen zeichnen sich in der Regel durch besondere vorteilhafte Eigenschaften aus, neben den Resistenzen gegenüber den erfindungsgemäßen Mitteln beispielsweise durch Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Emteguts bekannt.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten. Alternativ können neue Pflanzen mit veränderten Eigenschaften mit Hilfe gentechnischer Verfahren erzeugt werden (siehe z. B. EP-A-0221044, EP-A-0131624). Beschrieben wurden beispielsweise in mehreren Fällen
- gentechnische Veränderungen von Kulturpflanzen zwecks Modifikation der in den Pflanzen synthetisierten Stärke (z. B. WO 92/11376, WO 92/14827, WO 91/19806),
- transgene Kulturpflanzen, welche Resistenzen gegen andere Herbizide aufweisen, beispielsweise gegen Sulfonylharnstoffe (EP-A-0257993, US-A-5013659),
- transgene Kulturpflanzen, mit der Fähigkeit Bacillus thuringiensis-Toxine (Bt-Toxine) zu produzieren, welche die Pflanzen gegen bestimmte Schädlinge resistent machen (EP-A-0142924, EP-A-0193259).
- transgene Kulturpflanzen mit modifizierter Fettsäurezusammensetzung (WO 91/13972).

Zahlreiche molekularbiologische Techniken, mit denen neue transgene Pflanzen mit veränderten Eigenschaften hergestellt werden können, sind im Prinzip bekannt; siehe z.B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996 oder Christou, "Trends in Plant Science" 1 (1996) 423-431).
Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe der obengenannten Standardverfahren können z. B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codiereden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z. B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106).

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h. sowohl monokotyle als auch dikotyle Pflanzen. So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Gegenstand der vorliegenden Erfindung ist somit weiterhin ein Verfahren zur Bekämpfung von unerwünschten Pflanzen, vorzugsweise in Pflanzenkulturen, wobei die erfindungsgemäßen herbiziden Mittel auf die Pflanzen (z.B. Schadpflanzen wie mono- oder dikotyle Unkräuter oder unerwünschte Kulturpflanzen), das Saatgut oder die Fläche, auf der die Pflanzen wachsen (z.B. die Anbaufläche), ausgebracht werden.

Unter unerwünschten Pflanzen sind alle Pflanzen zu verstehen, die an Orten wachsen, wo sie unerwünscht sind. Dies können z.B. Schadpflanzen (z.B. mono- oder dikotyle Unkräuter oder unerwünschte Kulturpflanzen) sein, z.B. auch solche, die gegen bestimmte herbizide Wirkstoffe wie Glyphosate, Atrazin, Glufosinate oder Imidazolinon-Herbizide resistent sind.

Bevorzugt wird in dem erfindungsgemäßen Verfahren eine wirksame Menge der erfindungsgemäßen herbiziden Mittel zur Bekämpfung von Schadpflanzen angewendet, vorzugsweise in Pflanzenkulturen, beispielsweise in wirtschaftlich bedeutenden Ackerbaukulturen z.B. monokotylen Ackerbaukulturen z.B. Getreide (z.B. Weizen, Gerste, Roggen, Hafer), Reis, Mais, Hirse, oder dikotylen Ackerbaukulturen wie Zuckerrübe, Raps, Baumwolle, Sonnenblumen und Leguminosen z.B. der Gattungen Glycine (z.B. Glycine max. wie nicht-transgene Glycine max. (z.B. konventionelle Sorten wie STS-Sorten) oder transgene Glycine max. (z.B. RR-Soja oder LL-Soja) und deren Kreuzungen), Phaseolus, Pisum, Vicia und Arachis, oder Gemüsekulturen aus verschiedenen botanischen Gruppen wie Kartoffel, Lauch, Kohl, Karotte, Tomate, Zwiebel, sowie Dauer- und Plantagenkulturen wie Kern- und Steinobst, Beerenobst, Wein, Hevea, Bananen, Zuckerrohr, Kaffee, Tee, Citrus, Nussplantagen, Rasen, Palmenkulturen und Forstkulturen.

Die erfindungsgemäßen herbiziden Mittel weisen eine ausgezeichnete Selektivität in Kulturen von Leguminosen auf. Sie eignen sich z.B. zur selektiven Bekämpfung von unerwünschtem Pflanzenwuchs, z.B. von Schadpflanzen (z.B. monokotylen und dikotylen Unkräutern oder unerwünschten Kulturpflanzen), in Kulturen von transgenen und nicht-transgenen Leguminosen, insbesondere der Gattung Glycine, beispielsweise im Vorsaat-Verfahren, Vorauflauf-Verfahren oder im NachauflaufVerfahren.

Als Leguminosen kommen z.B. transgene und nicht-transgene Leguminosen z.B. der Gattungen Glycine, Phaseolus, Pisum, Vicia und Arachis in Frage. Bevorzugt kommen Leguminosen der Gattung Glycine in Frage, z.B. der Art Glycine max. (Soja) wie nicht-transgene Glycine max. (z.B. konventionelle Sorten wie STS-Sorten) oder transgene Glycine max. (z.B. RR-Soja oder LL-Soja) und deren Kreuzungen.

Die erfindungsgemäßen herbiziden Mittel können auch nicht-selektiv zur Bekämpfung unerwünschten Pflanzenwuchses eingesetzt werden, z.B. in Dauer- und Plantagenkulturen, an Wegrändern, Plätzen, Industrieanlagen, Flugplätzen oder Eisenbahnanlagen, oder zur sogenannten Bum-Down-Anwendung, z.B. in Ackerbaukulturen z.B. monokotylen Ackerbaukulturen wie Getreide (z.B. Weizen, Gerste, Roggen, Hafer), Reis, Mais, Hirse, oder dikotylen Ackerbaukulturen wie Zuckerrübe, Raps, Baumwolle, Sonnenblumen und Leguminosen z.B. der Gattungen Glycine (z.B. Glycine max. (Soja) wie nicht-transgene Glycine max. (z.B. konventionelle Sorten wie STS-Sorten) oder transgene Glycine max. (z.B. RR-Soja oder LL-Soja) und deren Kreuzungen), Phaseolus, Pisum, Vicia und Arachis, oder Gemüsekulturen aus verschiedenen botanischen Gruppen wie Kartoffel, Lauch, Kohl, Karotte, Tomate, Zwiebel. Bevorzugt erfolgt die Applikation dabei auf die aufgelaufenen Schadpflanzen (z.B. Unkräuter oder unerwünschte Kulturpflanzen), insbesondere vor dem Auflaufen der (erwünschten) Kulturpflanzen.

Als Dauer- und Plantagenkulturen kommen z.B. Kern- und Steinobst, Beerenobst, Wein, Hevea, Bananen, Zuckerrohr, Kaffee, Tee, Citrus, Nussplantagen, Rosen, Palmenkulturen und Forstkulturen in Betracht.

Eine bevorzugte Verwendung im nicht-selektiven Bereich ist die Burn-down-Anwendung in Kulturpflanzen, wobei die erfindungsgemäßen herbiziden Mittel vor dem Auflaufen der Kulturpflanzen auf die aufgelaufenen Schadpflanzen appliziert werden, bevorzugt ist dabei die Applikation vor der Aussaat der Kulturpflanzen oder bei der Aussaat der Kulturpflanzen.

Gegenstand der Erfindung ist auch die Verwendung der erfindungsgemäßen herbiziden Mittel zur Bekämpfung von unerwünschtem Pflanzenwuchs, vorzugsweise in Pflanzenkulturen.

Zur Bekämpfung von unerwünschtem Pflanzenwachstum (z.B. zur nicht-selektiven Bekämpfung von Schadpflanzen oder zur selektiven Bekämpfung von Schadpflanzen in Leguminosen), können die erfindungsgemäßen herbiziden Mittel auf die Pflanzen (z.B. (erwünschte) Kulturpflanzen oder Schadpflanzen wie mono- oder dikotyle Unkräuter oder unerwünschte Kulturpflanzen), das Saatgut (z.B.

Körner, Samen oder vegetative Vermehrungsorgane wie Knollen oder Sprossteile mit Knospen) oder die Fläche auf der die Pflanzen wachsen (z.B. die Anbaufläche) appliziert werden, insbesondere in herbizid wirksamer Menge. Sie können z.B. vor der Saat, sowie vor als auch nach dem Auflaufen der Pflanzen appliziert werden. Die Vorsaatapplikation kann z.B. durch Spritzen oder Einarbeitung in den Boden erfolgen. Auch Splitapplikationen z.B. im frühen Vorauflauf gefolgt von späterer Nachauflaufapplikation sind möglich. Bevorzugt ist eine Applikation auf die aufgelaufenen Schadpflanzen (z.B. mono- oder dikotyle Unkräuter oder unerwünschte Kulturpflanzen), insbesondere vor dem Auflaufen von (erwünschten) Kulturpflanzen wie Leguminosen.

Bevorzugt für die selektive Anwendung in Leguminosen ist eine Applikation auf aufgelaufene Pflanzen, insbesondere auf aufgelaufene Schadpflanzen (z.B. Unkräuter oder unerwünschte Kulturpflanzen), bevorzugt vor dem Auflaufen der Leguminosen. Bevorzugt für die nicht-selektive Anwendung ist die Applikation auf die aufgelaufenen Schadpflanzen (z.B. Unkräuter oder unerwünschte Kulturpflanzen). Bei der Bum-down-Anwendung wird dabei bevorzugt vor der Aussaat oder bei der Aussaat der Kulturpflanzen auf die aufgelaufenen Schadpflanzen appliziert.

Die angewandte Wirkstoffmenge kann in einem größeren Bereich schwanken. Sie hängt im wesentlichen von der Art des gewünschten Effektes ab. Im allgemeinen liegen die Aufwandmengen zwischen 0,01 g und 100 g Wirkstoff pro Hektar Bodenfläche. Für eine selektive Anwendung bevorzugt sind im allgemeinen niedrigere Aufwandmengen, z.B. im Bereich von 0,01 g bis 9 g Wirkstoff pro Hektar, vorzugsweise zwischen 0,1 g und 5 g pro Hektar, insbesondere in der Applikation auf aufgelaufene Pflanzen, insbesondere auf aufgelaufene Schadpflanzen (z.B. Unkräuter oder unerwünschte Kulturpflanzen). Für die nicht-selektive Anwendung bevorzugt sind im allgemeinen Aufwandmengen im Bereich von 0,01 g bis 49 g Wirkstoff pro Hektar, insbesondere 0,01 g bis 9 g Wirkstoff pro Hektar, vorzugsweise zwischen 0,1 g und 5 g pro Hektar.

Das Ölsuspensionskonzentrat der vorliegenden Erfindung weist eine ausgezeichnete chemische Stabilität während der Herstellung und Lagerung auf und eignet sich insbesondere auch für Kombinationen von Wirkstoffen mit unterschiedlichen physikalisch-chemischen Eigenschaften, z. B. eines in organischen Lösungsmitteln schwerlöslichen herbiziden Pyridyl-Sulfonylharnstoffes mit weiteren löslichen agrochemischen Wirkstoffen. Außerdem weist das Ölsuspensionskonzentrat eine ausgezeichnete physikalische Stabilität, eine gute Applizierbarkeit und Anwenderfreundlichkeit, sowie eine hohe biologische Effektivität und Kulturpflanzenverträglichkeit (Selektivität) auf.

Die in den nachfolgenden Beispielen beschriebenen Ölsuspensionskonzentrate wurden wie folgt hergestellt: Es wurde eine Vormischung hergestellt, wobei alle löslichen Komponenten aus c) d) f) und g), sowie gegebenenfalls der Verdicker in dem Lösungsmittel bzw. Lösungsmittelgemisch b) homogen verteilt werden. Dann wurden lösliche Wirkstoffe e) und h) in der Vormischung gelöst. Nach Abschluß des Lösungsprozesses wurde fester Dioxazin-Pyridyl-Sulfonylharnstoff a) und weitere unlösliche Komponenten aus d) bis g) und e) in die Mischung suspendiert. Die grobe Suspension wurde, nach einer Vorvermahlung, einer Feinvermahlung unterzogen.

Die in den nachfolgenden Beispielen verwendeten Abkürzungen haben, wenn nicht bereits definiert, folgende Bedeutung:
- Verbindung I-1: = Verbindung Nr. I-1 aus Tabelle 1
- Emcol^{®} P 18.60: = Verzweigtes Calcium Dodecylbenzolsulfonat, Akzo Nobel
- Genamin^{®} T-200: = Ethoxyliertes Alkylamin mit 20 Einheiten Ethylenoxid, Clariant
- Genapol^{®} X060: = polyethoxyliertes iso-Tridecanol mit 6 Einheiten Ethylenoxid, Clariant
- Genapol^{®} V4739: = polyethoxyliertes iso-Tridecanol mit 6 Einheiten Ethylenoxid, methoxy-verkappt, Clariant
- Solvesso^{®} 200: = aromatisches Mineralöl (Siedebereich 219-281 °C), Exxon
- Thixatrol^{®} ST: = Organisches Rhizinusölderivat, Elementis
- Triton^{®} GR-7M E: = Di(2-Ethylhexyl)sulfosuccinat Natriumsalz in aromatischem Lösungsmittel, Union Carbide

### Beispiele

Herstellung und Lagerung von Ölsuspensionskonzentraten (alle Angaben in Gew.-%)

**Tabelle A:**

| Beispiel | 1 | 2 | 3 | 4 | 5 |
|---|---|---|---|---|---|
| Verbindung I-1 | 2,13 | 2,08 | 2,11 | 2,07 | 10,13 |
| Solvesso^{®} 200 | 55,12 | 55,17 | 55,89 | 45,93 | 47,87 |
| Triton^{®} GR-7M E | 30,00 | 30,00 | 30,00 | 30,00 | 30,00 |
| Genapol^{®} X060 | 10,00 | -- | -- | -- | -- |
| Genapol^{®}) V4739 | -- | 10,00 | 10,00 | 10,00 | 10,00 |
| Emcol^{®} R 18.60 | 2,00 | 2,00 | 2,00 | 2,00 | 2,00 |
| Thixatrol^{®} ST | 0,75 | 0,75 | -- | -- | -- |
| Genamin^{®}) T-200 | -- | -- | -- | 10,00 | -- |

Die Beispiele 1 bis 5 wurden wiederholt, wobei statt Verbindung Nr. I-1 die Verbindungen Nr. I-3, I-8, I-9, I-10, I-11, I-12, I-14, I-21, I-22, I-23, I-29, I-30, I-51, I-52, I-60, I-70, I-142, I-143, I-145 aus Tabelle 1 eingesetzt wurden (Beispiele 6 bis 100). Die Formulierungen der Beispiele 1 bis 100 wurden 8 Wochen bei 40°C gelagert und waren dabei lagerstabil (bestimmt mittels HPLC).

## Patentansprüche

1. Ölsuspensionskonzentrat, enthaltend
a) ein oder mehrere herbizide Wirkstoffe aus der Gruppe der Dioxazin-Pyridylsulfonylharnstoffe in suspendierter Form,
b) ein oder mehrere organische Lösungsmittel, und
c) nicht-ionische Emulgatoren und Dispergatoren.

2. Ölsuspensionskonzentrat gemäß Anspruch 1, worin als Komponente b) enthalten sind, ein oder mehrere Lösungsmittel aus der Gruppe unsubstituierter oder substituierter Kohlenwasserstoffe, polare Lösungsmittel und Fettsäureester.

3. Ölsuspensionskonzentrat gemäß einem oder mehreren der Ansprüche 1 oder 2, zusätzlich enthaltend als Komponente e) ein oder mehrere Safener, vorzugsweise aus der Gruppe Dichlorphenylpyrazolin-3-carbonsäure und ihre Ester, 5,5-Diphenyl-2-isoxazolin-3-carbonsäure und ihre Ester und 8-Chinolinoxyessigsäure.

4. Ölsuspensionskonzentrat gemäß einem oder mehreren der Ansprüche 1 bis 3, zusätzlich enthaltend als Komponente d) ein oder mehrere Sulfosuccinate, vorzugsweise aus der Gruppe der Mono- und Diester der Sulfobernsteinsäure.

5. Ölsuspensionskonzentrat gemäß einem oder mehreren der Ansprüche 1 bis 4 enthaltend als Komponente c) ein oder mehrere Mitglieder aus der Gruppe der polyethoxylierten Alkohole, polyethoxylierten Triglyceride, die Hydroxyfettsäuren enthalten, Polyethylenoxid-Polypropylenoxid-Block-Copolymere enthalten.

6. Ölsuspensionskonzentrat gemäß einem oder mehreren der Ansprüche 1 bis 5, wobei der Gewichtsanteil der nicht-ionischen Emulgatoren und Dispergatoren zwischen 1 und 20 Gew.% beträgt.

7. Verfahren zur Herstellung eines Ölsuspensionskonzentrats gemäß einem oder mehreren der Ansprüche 1 bis 6, worin die Komponenten gemischt und gegebenenfalls vermahlen werden.

8. Verfahren zur Bekämpfung von unerwünschten Pflanzen, worin ein Ölsuspensionskonzentrat gemäß einem der mehreren der Ansprüche 1 bis 6 auf die Pflanzen, das Saatgut oder die Fläche auf der Pflanzen wachsen, appliziert wird.

9. Verwendung eines Ölsuspensionskonzentrats gemäß einem oder mehreren der Ansprüche 1 bis 6, zur Bekämpfung von unerwünschten Pflanzen.

10. Verwendung eines Ölsuspensionskonzentrats gemäß einem oder mehreren der Ansprüche 1 bis 6, zur Herstellung eines herbiziden Mittels.

11. Verwendung gemäß Anspruch 10, worin das herbizide Mittel eine Suspension, Suspoemulsion oder ein Lösung ist.

12. Herbizide Mittel, erhältlich durch Verdünnen eines Ölsuspensionskonzentrats gemäß einem oder mehreren der Ansprüche 1 bis 6.

13. Verfahren zur Herstellung eines herbiziden Mittels gemäß Anspruch 12, worin ein Ölsuspensionskonzentrat gemäß einem oder mehreren der Ansprüche 1 bis 6 verdünnt wird.

14. Verfahren zur Bekämpfung von unerwünschten Pflanzen, worin ein herbizides Mittel gemäß Anspruch 12 auf die Pflanzen, das Saatgut oder die Fläche auf der Pflanzen wachsen, appliziert wird.

15. Verwendung eines herbiziden Mittels gemäß Anspruch 12, zur Bekämpfung von unerwünschten Pflanzen.

16. Verwendung eines oder mehrerer Sulfosuccinate und/oder eines oder mehrerer anorganischer Salze zur Stabilisierung eines Ölsuspensionskonzentrats gemäß einem oder mehreren der Ansprüche 1 bis 3.

## Claims

1. An oil suspension concentrate comprising
a) one or more herbicidally active compounds from the group of the dioxazinepyridylsulfonylureas in suspended form,
b) one or more organic solvents, and
c) nonionic emulsifiers and dispersants.

2. The oil suspension concentrate as claimed in claim 1 which comprises, as component b), one or more solvents from the group of unsubstituted or substituted hydrocarbons, polar solvents and fatty esters.

3. The oil suspension concentrate as claimed in one or both of claims 1 and 2 which additionally comprises, as component e), one or more safeners, preferably from the group of dichlorophenylpyrazoline-3-carboxylic acid and its esters, 5,5-diphenyl-2-isoxazoline-3-carboxylic acid and its esters and 8-quinolineoxyacetic acid.

4. The oil suspension concentrate as claimed in one or more of claims 1 to 3 which additionally comprises, as component d), one or more sulfosuccinates, preferably from the group of the monoesters and diesters of sulfosuccinic acid.

5. The oil suspension concentrate as claimed in one or more of claims 1 to 4 which comprises, as component c), one or more members from the group of the polyethoxylated alcohols, polyethoxylated triglycerides which comprise hydroxyl fatty acids, and polyethylene oxide/polypropylene oxide block copolymers.

6. The oil suspension concentrate as claimed in one or more of claims 1 to 5, the proportion by weight of the nonionic emulsifiers and dispersants being between 1 and 20% by weight.

7. A process for preparing an oil suspension concentrate as claimed in one or more of claims 1 to 6 which comprises mixing and, if appropriate, grinding the components.

8. A method for controlling unwanted plants which comprises applying an oil suspension concentrate as claimed in one or more of claims 1 to 6 to the plants, the seed or the area on which plants grow.

9. The use of an oil suspension concentrate as claimed in one or more of claims 1 to 6 for controlling unwanted plants.

10. The use of an oil suspension concentrate as claimed in one or more of claims 1 to 6 for preparing a herbicidal composition.

11. The use as claimed in claim 10 wherein the herbicidal composition is a suspension, a suspoemulsion or a solution.

12. A herbicidal composition obtainable by diluting an oil suspension concentrate as claimed in one or more of claims 1 to 6.

13. A process for preparing a herbicidal composition as claimed in claim 12 which comprises diluting an oil suspension concentrate as claimed in one or more of claims 1 to 6.

14. A method for controlling unwanted plants which comprises applying a herbicidal composition as claimed in claim 12 to the plants, the seed or the area on which plants grow.

15. The use of a herbicidal composition as claimed in claim 12 for controlling unwanted plants.

16. The use of one or more sulfosuccinates and/or one or more inorganic salts for stabilizing an oil suspension concentrate as claimed in one or more of claims 1 to 3.

## Revendications

1. Concentré en suspension dans l'huile, contenant
a) une un plusieurs substances actives herbicides du groupe des dioxazine-pyridylsulfonylurées sous une forme en suspension,
b) un ou plusieurs solvants organiques, et
c) des émulsifiants et des dispersants non ioniques.

2. Concentré en suspension dans l'huile suivant la revendication 1, dans lequel un ou plusieurs solvants du groupe d'hydrocarbures non substitués ou substitués, solvants polaires et esters d'acides gras sont contenus comme composant b).

3. Concentré en suspension dans l'huile suivant l'une ou plusieurs des revendications 1 ou 2, contenant en outre comme composant a) un ou plusieurs phytoprotecteurs, avantageusement du groupe de l'acide dichlorophényl-pyrazoline-3-carboxylique et ses esters, de l'acide 5,5-diphényl-2-isoxazoline-3-carboxylique et ses esters et de l'acide 8-quinolinoxyacétique.

4. Concentré en suspension dans l'huile suivant l'une ou plusieurs des revendications 1 à 3, contenant comme composant d) un ou plusieurs sulfosuccinates, avantageusement du groupe des monoesters et diesters de l'acide sulfosuccinique.

5. Concentré en suspension dans l'huile suivant l'une ou plusieurs des revendications 1 à 4, contenant comme composant c) un ou plusieurs membres du groupe des alcools polyéthoxylés, des triglycérides polyéthoxylés, qui contiennent des acides gras hydroxylés, des copolymères séquencés poly(oxyde d'éthylène)-poly(oxyde de propylène).

6. Concentré en suspension dans l'huile suivant l'une ou plusieurs des revendications 1 ou 5, dans lequel la proportion en poids d'émulsifiants et de dispersants non ioniques s'élève entre 1 et 20 % en poids.

7. Procédé de production d'un concentré en suspension dans l'huile suivant l'une ou plusieurs des revendications 1 à 6, dans lequel les composants sont mélangés et éventuellement broyés.

8. Procédé de lutte contre des plantes indésirables, dans lequel un concentré en suspension dans l'huile suivant l'une ou plusieurs des revendications 1 à 6 est appliqué aux plantes, aux semences ou à l'aire sur laquelle des plantes croissent.

9. Utilisation d'un concentré en suspension dans l'huile suivant l'une ou plusieurs des revendications 1 à 6 pour combattre des plantes indésirables.

10. Utilisation d'un concentré en suspension dans l'huile suivant l'une ou plusieurs des revendications 1 à 6 pour la production d'une composition herbicide.

11. Utilisation suivant la revendication 10, dans laquelle la composition herbicide est une suspension, une suspo-émulsion ou une solution.

12. Compositions herbicides, obtenues par dilution d'un concentré en suspension dans l'huile suivant l'une ou plusieurs des revendications 1 à 6.

13. Procédé de préparation d'une composition herbicide suivant la revendication 12, dans lequel un concentré en suspension dans l'huile suivant l'une ou plusieurs des revendications 1 à 6 est dilué.

14. Procédé de lutte contre des plantes indésirables, dans lequel une composition herbicide suivant la revendication 12 est appliquée aux plantes, aux semences ou à l'aire sur laquelle les plantes croissent.

15. Utilisation d'une composition herbicide suivant la revendication 12 pour combattre des plantes indésirables.

16. Utilisation d'un ou plusieurs sulfosuccinates et/ou d'un ou plusieurs sels inorganiques pour stabiliser un concentré en suspension dans l'huile suivant une ou plusieurs des revendications 1 à 3.
